Europäisches Patentamt

**European Patent Office**

Office européen des brevets

(11) Publication number : **0 354 771 B1**

# (12) EUROPEAN PATENT SPECIFICATION

(45) Date of publication of patent specification :
**31.05.95 Bulletin 95/22**

(51) Int. Cl.⁶ : **G07F 7/10, H04L 9/00**

(21) Application number : **89308071.3**

(22) Date of filing : **09.08.89**

(54) **Personal identification number processing using control vectors.**

(30) Priority : **26.08.88 US 237938**
**11.08.88 US 231114**

(43) Date of publication of application :
**14.02.90 Bulletin 90/07**

(45) Publication of the grant of the patent :
**31.05.95 Bulletin 95/22**

(84) Designated Contracting States :
**DE FR GB IT NL**

(56) References cited :
**EP-A- 0 186 981**
**US-A- 4 850 017**

(73) Proprietor : **International Business Machines**
**Corporation**
**Old Orchard Road**
**Armonk, N.Y. 10504 (US)**

(72) Inventor : **Matyas, Stephen M.**
**10298 Cedar Ridge Drive**
**Manassas VA 22110 (US)**
Inventor : **Johnson, Donald B.**
**9430 Brensville Road**
**Manassas VA 22111 (US)**

Inventor : **Abraham, Dennis G.**
**5795 Gettysburg Drive**
**Concord North Carolina (US)**
Inventor : **Karne, Ramesh K.**
**13613 Copper Ridge Drive**
**Herndon VA 22071 (US)**
Inventor : **Le, An V.**
**1217 South Columbus Street**
**Arlington Virginia 22204 (US)**
Inventor : **Prymak, Rostislaw**
**15900 Fairway Drive**
**Dumfies Valhalla (US)**
Inventor : **Thomas, Julian**
**RD No.3 Rombout Road**
**Poughkeepsie NY 12603 (US)**
Inventor : **Wilkins, John D.**
**P.O. Box 8**
**Somerville Virginia (US)**
Inventor : **Yeh, Phil C.**
**88 Round Hill Road**
**Poughkeepsie New York (US)**
Inventor : **Smith, Ronald M.**
**15 Cider Mill Loop**
**Wappingers Falls New York 12590 (US)**

(74) Representative : **Burt, Roger James, Dr.**
**IBM United Kingdom Limited**
**Intellectual Property Department**
**Hursley Park**
**Winchester Hampshire SO21 2JN (GB)**

## Description

The present invention relates to personal identification number processing using control vectors.

Every day electronic funds transfer (EFT) systems electronically transfer billions of dollars between institutions and individuals. Such transactions cannot be processed safely unless user identities can be validated securely and the correct, unaltered transmission of messages between network nodes can be assured.

A personal identification number (PIN) is a secret number assigned to, or selected by, the holder of a debit or credit card used in an electronic funds transfer (EFT) or point of sale (POS) system. The PIN serves to authenticate the cardholder to the system. Cryptography is employed in EFT and POS systems to insure the confidentiality and integrity of PINs and other EFT transactions.

Cryptography is the transformation of intelligible information into apparently unintelligible form in order to conceal the information from un-authorised parties. Cryptography is the only known practical method to protect information transmitted through communications networks that use land lines, communications satellites and microwave facilities. It can also be used not only to protect the privacy of data, but also the integrity of data.

The cryptographic transformation of data is ordinarily defined by a selected algorithm, or procedure, under the control of a key. Since the algorithm is normally public knowledge, protection of the transformed, or enciphered, data depends on secrecy of the key. Thus, the key must be kept secret to prevent an opponent from simply using the known algorithm and key to recover the enciphered data. The protection of the data therefore hinges on protection of secret keys.

The invention disclosed herein deals with cryptography PIN processing which has as its objective the application of cryptographic keys and methods to protecting the confidentiality and integrity of PINs during generation, translation, distribution, and verification whereas co-pending patent application (MA9-88-011) deals with the generation, distribution and management of the keys themselves.

In order for the PIN to function properly, it must be known only to the cardholder and to the financial institution or institutions capable of authenticating the cardholder, but to no one else.

The PIN must contain enough digits so that an adversary (cardfinder, thief or counterfeiter) would have little chance of finding a correct PIN via repeated guesses (or trial and error). But the PIN should not contain too many digits, otherwise it will slow down the transaction time. The longer the PIN the more difficult it is to remember and the greater the probability of an entry error. Four to six decimal digit PINs are the industry standard, although longer PINs are sometimes employed as a customer-selected option.

It is customary to place a limit on the number of consecutive incorrect PIN entries that a cardholder is allowed. Ordinarily, transactions are aborted after three incorrect PIN entries. This makes it difficult for an adversary to guess a correct PIN via PIN exhaustion. Card retention is also sometimes employed as a means to discourage unauthorised card usage.

### The Bank Card and PIN as a Means for User Authentication

A user is normally provided with an embossed, magnetic stripe identification card (bank card) containing an institution identification number, the card's expiration date, and a primary account number (PAN). The institution at which the customer opens his/her account and which provides the user with a bank card, is called the issuer. At an entry point to the system, information on the user's bank card is read into the system and the user enters a secret quantity called the personal identification number (PIN). If the cardholder has supplied the correct PIN and if the balance in the account is sufficient to permit the transaction and if that type of transaction is allowed for that account, the system authorises the funds transfer.

It has already been proposed in European specification EPA 186981 to provide a security module for use in an electronic funds transfer terminal which is contained in a tamper resistant housing. The module is designed to encrypt personal identification numbers (PINs), the encryption being carried out in a security controller including its own microprocessor and encryption/decryption unit.

### Electronic Funds Transfer and Point of Sale Environment

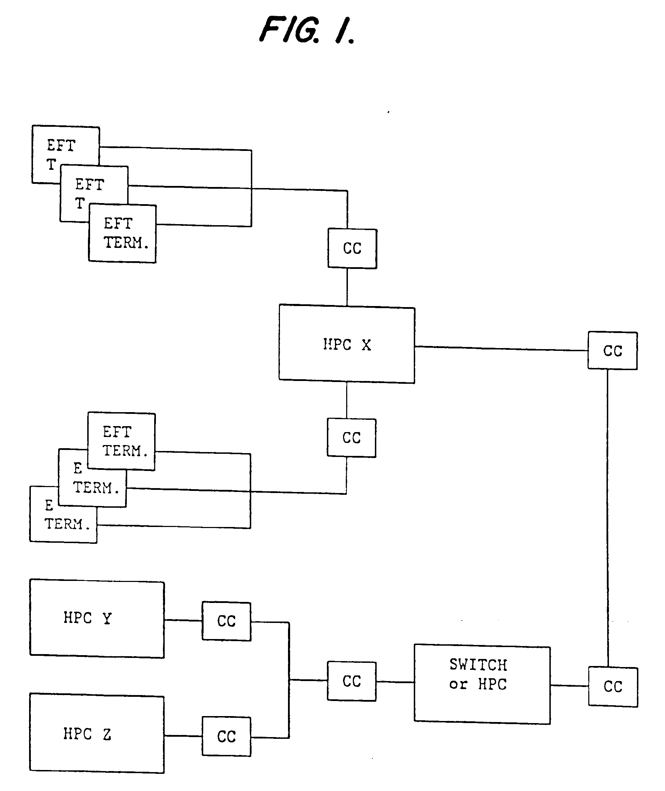

Consider a network configuration as shown in Fig. 1. The entry point at which transaction requests are initiated, such as point of sale (POS) terminal or an automated teller machine (ATM), is defined as an EFT terminal. An institution's computer facility, which also happens to manage the connected EFT terminals, is referred to as a host processing centre (HPC). The three HPCs shown in Fig. 1 are interconnected via an intelligent switch. The switch, which can be another HPC, establishes connections between the HPCs so that information can be routed in the network efficiently. A communications control unit (CC), an independent device positioned in the path between an HPC and its associated EFT terminals and between an HPC and adjacent network nodes, is responsible for managing data transmissions over the communications links. Similarly, EFT terminals are assumed to provide complementary support for link management functions. The CC has the capacity to verify systems users and data.

The HPC that first acts on information entered at an EFT terminal is the acquirer (acquiring HPC). A user who initiates a transaction at an EFT terminal may be a customer of a local institution (HPC X, in which case the acquirer is also the issuer) or a remote (distant) institution (HPC Y or HPC Z). If a user can initiate transactions at an entry point not controlled by the issuer, the supporting network is called an interchange system.

Example Without Cryptography

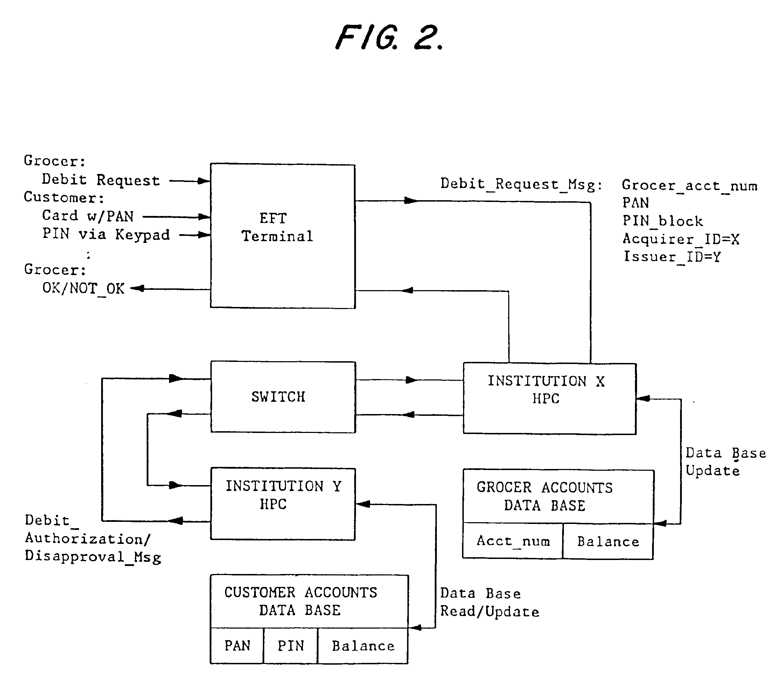

Consider a simple transaction in which cryptography is not employed. This is illustrated in Fig. 2. A customer wishes to use a bank card to pay a grocery bill of $35.00 and to receive an additional $50.00 in cash. The grocer's account is with institution X and the customer's account is with institution Y. The customer's card is inserted into the EFT terminal, either by the customer or by an employee of the retailer attending the EFT terminal, and the customer enters in PIN via a suitable entry device such as a keyboard or a PIN pad, which looks and operates much like a hand-held calculator. Similarly, the grocer enters a transfer request for $85.00 to be transferred from the customer's account to the grocer's account ($35.00 for the groceries plus the $50.00 to be given to the customer).

For purposes of transmission and processing, the PIN is stored as a 16 decimal digit PIN block (8 bytes). Several PIN block formats have been standardised, or through use are now de facto standards.

The information entered at the EFT terminal is assembled into a debit request message. This message or transaction request, which includes the customer's PIN (i.e., the 8 byte PIN block), his account number (PAN), and suitable routing information, is then sent via the acquirer (HPC X) and switched to the issuer (HPC Y).

Upon receiving the debit request, the HPC Y verifies that the PIN correlates properly with the customer's PAN, and that the customer's account balance is sufficient to cover the $85.00 transfer. If the PIN check fails, the user is normally give at least two more chances to enter the correct PIN. If after the additional tries the PIN is still rejected, HPC Y sends a negative reply to HPC X. If the PIN is correct but the account balance is insufficient to cover the transfer, HPC Y denies the debit request by sending a negative reply or debit refusal (insufficient funds) message to HPC X. A message is then sent via the network to the grocer's EFT terminal indicating to the grocer that the funds transfer has been disapproved.

If the debit request is approved, HPC Y records the debit request, reduces the customer's account balance by $85.00, and transmits a positive reply or debit authorisation message back to HPC X. Upon receiving the debit authorisation HPC X takes two actions. A message is sent to the grocer's EFT terminal, indicating to the grocer that the funds transfer has been approved. Then HPC X credits the grocer's account with $85.00. This completes the transaction.

When the cardholder is authenticated by the issuer's HPC or the HPC of another designated node, the process is the to operate in the on-line mode. If the cardholder is authenticated by the terminal, the process is the to operate in the off-line mode.

Example with Cryptography

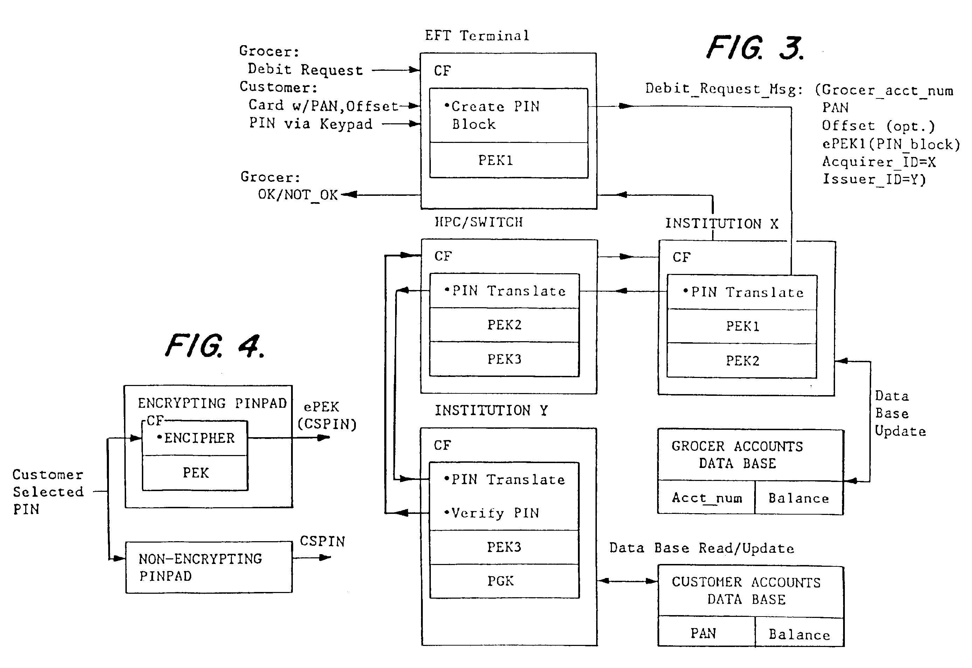

Consider now the same simple transaction in which cryptography is employed. This is illustrated in Fig. 3. In this case, the PIN block derived from the customer entered PIN (and, in some cases, other data) is encrypted with a secret PIN encrypting key PEK1. For sake of discussion, the PIN block format is assumed to be IBM encrypting PIN pad format. The PIN encrypting key is shared between the EFT terminal and the acquirer (HPC X).

At the acquirer (HPC X), the encrypted PIN block is translated from encipherment under PIN encrypting key PED1 to encipherment under PIN encrypting key PEK2. PEK2 is a PIN encrypting key shared between the acquirer (HPC X) and the switch. Likewise, at the switch, the encrypted PIN block is translated from the encipherment under PEK2 to encipherment under PEK3. PEK3 is a PIN encrypting key shared between the switch and the issuer (HPC Y). The cryptographic PIN translation operation is accomplished via a PIN Translate instruction.

At the issuer (HPC Y), the encrypted PIN block is reformatted from IBM encrypting PIN pad format to IBM 3624 format. This cryptographic operation is also performed via a PIN Translate instruction, except here the input and output PIN encrypting keys can be the same. The operation consists of decrypting the PIN block under PEK3, reformatting the PIN block from the IBM encrypting PIN pad format to the IBM 3624 format and re-encrypting the resultant PIN block under PEK3. (It is also possible to re-encrypt the resultant PIN block under a different key PEK4.) The reformatted PIN block is then verified using a Verify PIN instruction. The Verify PIN instruction accepts as inputs the encrypted PIN block (in 3624 PIN block format), the PAN, the encrypted value of PEK3), and an encrypted system-defined PIN Generating Key PGK (also called a PIN validation key). Internally, the customer's PIN is recovered from the decrypted PIN block. This PIN is compared for equality with a similar system generated PIN derived from the customer's PAN, the decrypted PIN Generating Key (PGK), and other algorithm dependent data supplied to the instruction, which is unimportant to the discussion. The Verify PIN instruction returns a "1" if the entered PIN and internally computed PIN values are equal, otherwise it returns a "0".

The same algorithm used in PIN validation to create the internally computed PIN value is also used to generate PINs. Generate PINs can be output in clear or encrypted form.

In summary, four cryptographic instructions are required to properly support PIN processing functions: Create PIN Block, PIN Translate, Verify PIN, and Generate PIN. The Create PIN Block instruction creates a PIN block, in one of several formats from a customer entered PIN and other user and system dependent data, and encrypts the PIN block under a supplied encrypted PIN encrypting key (PEK). The PIN Translate instruction provides two functions. It can be used to re-encipher a PIN block from encipherment under a first PIN encrypting key to a different second PIN encrypting key. It can also be used to reformat the PIN block, i.e., from a first PIN format to a second PIN format. The Verify PIN instruction is used in validating system generated PINs, i.e., PINs originally generated from a system PIN Generating Key (PGK). Clear PINs are ordinarily sent to respective cardholder using PIN mailers (special envelopes allowing the PINs to be printed on the inside of the envelope but such that the PIN does not appear on the outside of the envelope). The Generate PIN instruction is used in generating system supplied PINs. In those cases where customers select their own PINs, an offset value is recorded on the customer's bank card. The offset, when combined with the entered PIN value, produces a value (called the derived PIN) which can be compared for equality with the system generated PIN. Thus, the Verify PIN instruction is employed even in situations where customers select their own PIN values.

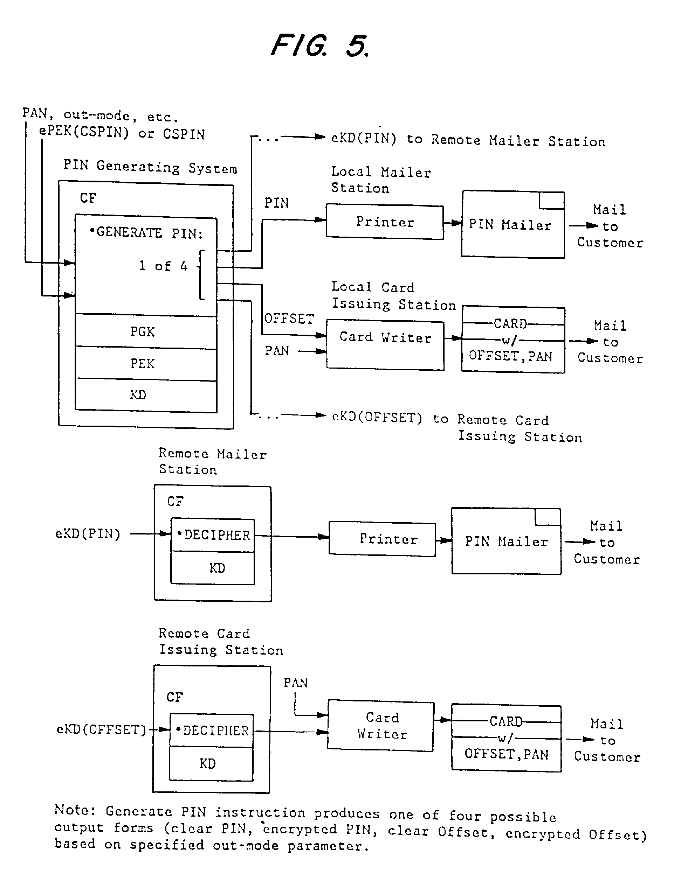

Fig. 4 shows two methods whereby a customer enters a personally selected PIN, i.e., via a non-encrypting PIN pad or via an encrypting PIN pad. The output in either case is sent to the PIN generating system. See Fig. 5. The PIN generating system optionally accepts a customer selected PIN (CSPIN), internally generates a PIN from the PAN and other data, then outputs either the internal PIN or its Offset from CSPIN, if CSPIN is provided. Offsets are written to the customer's new bank card. If CSPIN is not provided, the internally generated PIN is printed on a PIN mailer and mailed to the customer. The bank card with magnetically encoded PAN and optional Offset is also mailed to the customer. PIN Mailer printers and bank card writers may be located at remote sites.

## PIN Processing Requirements

PIN processing requirements can be summarised as follows:
- 1. Generate PINs both in encrypted and clear form suitable for the preparation of PIN mailers.
- 2. Generate PIN offsets both in encrypted and clear form suitable for the preparation of bank cards.
- 3. Create a formatted PIN block from a customer entered clean PIN and encrypt the PIN block with a supplied PIN encrypting key.
- 4. Translate PINs from encipherment under a first encrypting key (PEK1) to encipherment under a different second encrypting key (PEK2).
- 5. Reformat PINs from one PIN block format to another PIN block format. But provide a controlling mechanism so that some translations are permitted and some can be denied.
- 6. Verify PINs using one or more algorithms (i.e., do the comparison using a clear customer entered PIN and a clear system generated PIN).
- 7. Verify PINs using a database of encrypted PINs (i.e., do the comparison using an encrypted customer entered PIN and an encrypted system stored PIN).

## PINs Versus Keys, a Comparison

PINs are uniquely different from keys in several respects, which makes PIN management uniquely different from key management.

PINs, typically 4 digits in length, have far fewer combinations than do 56 bit keys. Consequently, PINs are particularly susceptible to dictionary attacks. In such an attack, the system interfaces and cryptographic instructions are manipulated to construct a dictionary of clear and encrypted PINs, where the PINs are stored in a single PIN block format and are encrypted under a fixed PIN encrypting key. If an intercepted encrypted PIN can be reformatted and translated to encryption under the same PIN encrypting key, then the unknown clear PIN value can be easily deduced by locating its encrypted value in the dictionary. With 4 digit PINs, the processing and storage requirements to carry out such an attack are negligible. However, since keys have 2**56 combinations, they are not susceptible to the same sort of dictionary attack.

PINs are stored and transmitted in PIN blocks consisting of 16 decimal digits (or 8 bytes). Several PIN block formats have been standardised or have become industry-accepted de facto standards. They include:

ANSI 9.8
ISO FORMAT 0
VISA FORMAT 1 (least significant account number)
VISA FORMAT 4 (most significant account number)
IBM 4736
ECI FORMAT 1
ISO FORMAT 1
ECI FORMAT 4
VISA FORMAT 2
VISA FORMAT 3 (PIN can only be 4 digits)
IBM ENCRYPTING PIN PAD (4704 EPP)
IBM 3624
IBM 3621 and 5906
ECI FORMAT 2
ECI FORMAT 3
ANSI 9.8x
IBM NON-ENCRYPTING PIN PAD
DIEBOLD, DOCUTEL, NCR
BURROUGHS

A significant portion of PIN processing consists of PIN block creation, reformatting from one PIN block format to another, and PIN recovery (extracting the PIN from the PIN block). On the other hand, keys are always stored as 64 bits, consisting of 56 independent key bits and 8 bits that can be used for parity. Unlike PIN management, which must recognise several PIN block formats, key management processes keys in only one format.

In simple terms, PINs exist so that they can be verified. Keys can also be verified, but their primary reason for existence is to provide confidentiality and integrity to data (and keys) via cryptographic means. Several industry-accepted PIN Verification Algorithms are available for authenticating PINs.

PINs appear in clear form at the point of entry to the system (i.e., when a PIN related transaction is requested) and when generated for the purpose of issuing PIN mailers. Personal keys may appear in clear form at the entry point to the system, but system keys will appear in clear form at the entry point only during installation. Thus, PINs and keys are managed differently.

## PINs Versus Data, a Comparison

PINs are an integral part of the EFT and POS financial transactions, and must be used in accordance with a pre-established agreement which defines the liability imposed on each party to the agreement for loss of money resulting from a discovered PIN. Consequently, once encrypted, the PIN is never decrypted. All PIN verification is performed with the encrypted PIN, or with the clear PIN inside the secure boundary of the cryptographic facility.

Data, on the other hand, is encrypted by a sender (device or application program) and decrypted by a receiver (device or application). Otherwise, received data would be of no use. This defines a fundamental difference in the management of PINs and the management of data.

## PIN Security and PIN Processing

It is important to recognise that PINs have their own unique security and processing requirement, distinct from keys and data.

Options are needed for both system specified and user specified PINs. Standards exist which define PIN block formats, to which the implementer must conform. Proprietary modes of PIN processing also exist. Extra defences are necessary to prevent electronic speed attacks which can accumulate a dictionary of clear and encrypted PINs.

It is important for new equipments and methods for managing and handling PINs to be compatible with existing equipments and methods for managing and handling PINs. However, new equipments can offer enhanced PIN security without jeopardising compatibility with existing equipments.

Prior art methods for handling various PIN formats and providing compatibility with clear PIN interfaces have been inadequate from security, complexity, and usability standpoints. With the proliferation of PIN formats, methods to associate PIN format to PIN encrypting key for cryptographic separation have become unwieldy. Methods to associate PIN Verification algorithm to PIN generating key for cryptographic separation have likewise become complex and unmanageable. PIN format translation have been inadequately controlled to prevent conversions from PIN formats of a given cryptographic strength to ones of lesser strength. Compatibility with older systems employing clear PIN interfaces has been satisfied with similar clear PIN interfaces which expose systems to attack wherein clear PIN inputs permit construction of dictionaries of clear and encrypted PINs. Furthermore, prior art methods to cryptographically separate clear and encrypted PIN interfaces have been inadequate from a system complexity and usability standpoint. Prior art methods do not provide the security administrator with flexible, secure methods for configuring the PIN processing systems to support compatibility requirements.

It is an object of the invention to provide an improved method of cryptographic PIN processing.

This object is solved by the features of Claims 1 and 8.

As disclosed in an embodiment of the invention described hereinafter, cryptographic PIN processing is achieved in an improved manner by associating control vectors with the PIN generating (verification) keys and PIN encrypting keys which provide authorisation for the uses of the keys intended by the originator of the keys. The originator may be a local cryptographic facility (CF) and a utility program under the control of a security administrator, or the originator may be another network node which uses the key management methods described in the above-referenced co-pending patent applications to distribute the keys.

Among the uses specified by the control vector are limitations on the authority to use the associated key with certain PIN processing instructions, such as PIN generation, verification, translation and PIN block creation. Furthermore, the control vector may limit the authority of certain instructions to process clear PIN inputs (such as in PIN verification). The control vector may contain information identifying and, possibly restricting, PIN processing to a particular PIN format or particular processing algorithm.

The control vector implementation provides a flexible method for coupling format, usage, and processing authorisation to keys. The system administrator can exercise flexibility in changing the implementation of his security policy by selecting appropriate control vectors. Furthermore, a method is provided for the security administrator to restrict certain PIN format translations.

The control vector implementation also provides an improved level of security by isolating clear and encrypted PIN processing and by coupling PIN formats to generating and encrypting keys. It is more flexible than in the prior art. It can control the use of clear PIN interfaces in accordance with a security policy established by the system manager. It can restrict the translation of PINs from one format to another format based on the security policy established by the system manager. It can build into the storage of a PIN encrypting key the authority to encrypt a selected PIN block formator to use that key with a selected PIN verification algorithm.

The present invention will be described further by way of example with reference to embodiments thereof as illustrated in the accompanying drawings, in which:-

Fig. 1 illustrates an EFT network configuration which supports interchange;

Fig. 2 shows a non-cryptographic PIN processing transaction in an EFT network;

Fig. 3 shows a cryptographic PIN processing transaction in an EFT network.

Fig. 4 shows two methods for entering a customer selected PIN into a PIN generating (or card issuing) system;

Fig. 5 shows a PIN generating system for the card issuer: PIN Offsets, PANs and other data are written to new bank cards at local or remote stations: PINs are printed on secure PIN mailers at local or remote printer stations;

Fig. 6 shows one control vector format for PIN-Encrypting Keys;

Fig. 7 shows one control vector format for PIN-Generating Keys;

Fig. 8 is a block diagram of a Create Pin Block instruction;

Fig. 9 is a block diagram of a Generate IBM 3624 PIN instruction;

Fig. 10 is a block diagram of a Verify IBM 3624 PIN instruction;

Fig. 11 is a block diagram of a PIN Translate instruction; and

Fig. 12 is a block diagram of a data processing system with a cryptographic facility;

Cryptographic PIN processing is achieved in an improved manner by associating control vectors with the PIN generating (verification) keys and PIN encrypting keys which provide authorisation for the uses of the keys intended by the originator of the keys. The originator may be the local cryptographic facility (CF) and a utility program under the control of a security administrator, or the originator may be another network node which uses compatible key management methods to distribute the keys.

Among the uses specified by the control vector are limitations on the authority to use the associated key with certain PIN processing instructions, such as PIN generation, verification, translation, and PIN block creation. Furthermore, the control vector may limit the authority of certain instructions to process clear PIN inputs (such as in PIN verification). The control vector may contain information identifying and, possibly restricting, PIN processing to a particular PIN format or particular processing algorithm.

The control vector implementation provides a flexible method for coupling format, usage, and processing authorisation to keys. The system administrator can exercise flexibility in changing the implementation of his security policy by selecting appropriate control vectors in accordance with the invention. Furthermore, a method is provided for the security administrator to restrict certain PIN format translations.

The control vector implementation also provides an improved level of security by isolating clear and encrypted PIN processing and by coupling PIN formats to generating and encrypting keys.

The following are some of the PIN processing instructions and the salient security features provided by the control vector implementation.

- 1. Create PIN Block

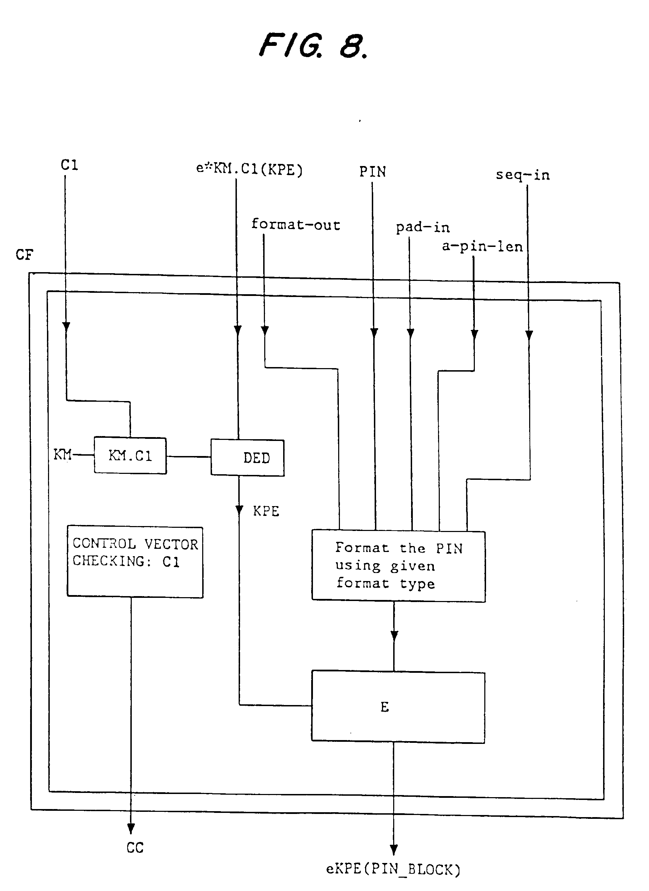

The create PIN block (CPINB) instruction illustrated in FIG. 8, creates a PIN block in one of several possible PIN block formats and encrypts the PIN block with a specified PIN encrypting key. The PIN block is created from a clear PIN and, as necessary, other user or system specific data specified as inputs to the CPINB instruction.

- 2. Generate IBM 3624 PIN

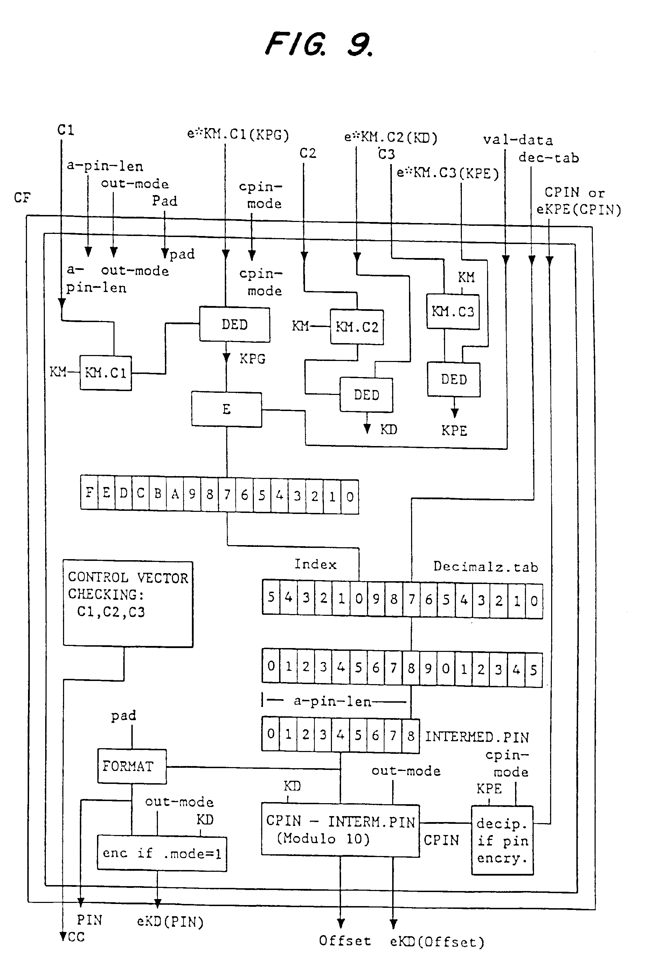

The generate PIN (GPIN) instruction illustrated in Fig. 9 produces a formatted PIN block from a generated PIN or a PIN offset from a generated PIN and a specified customer-selected PIN. The GPIN instruction generates PINs using one of several possible PIN generation algorithms. The desired PIN generation algorithm is specified via a parameter input to the GPIN instruction. Each PIN generation algorithm generates PINs from a common, secret PIN generating key and other user-, system- and algorithm-specific data supplied as inputs to the GPIN instruction.

- 3. Verify IBM 3624 PIN

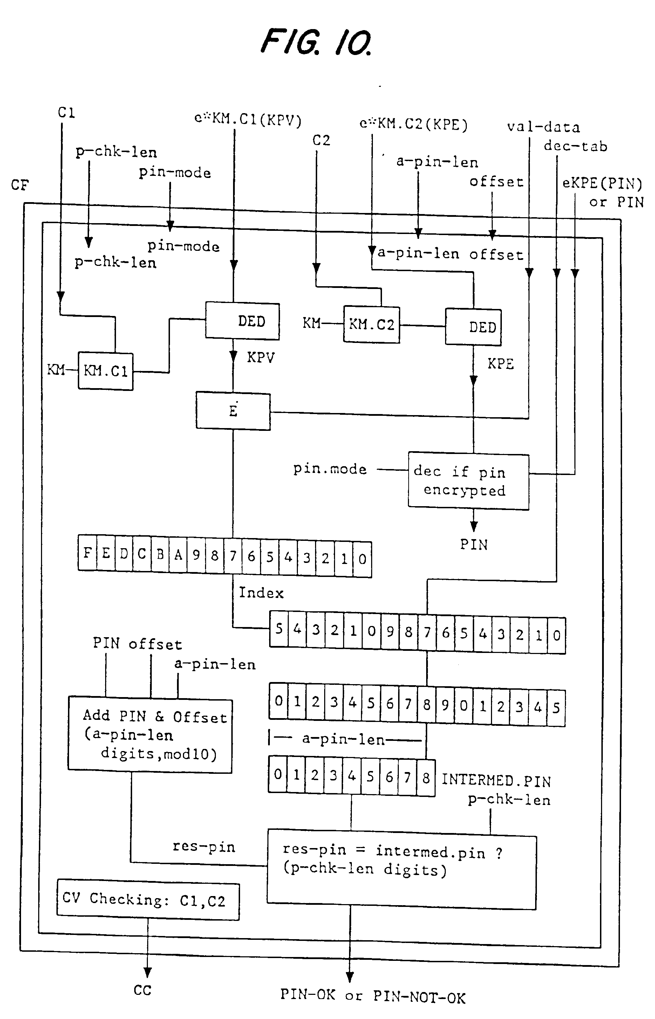

The verify PIN (VPIN) instruction illustrated in Fig. 10, produces a 1 (yes) or 0 (no) indicating whether a specified input PIN is equal to an internally generated PIN. The VPIN instruction supports both clear and encrypted modes for the input PIN, although these modes can be further restricted via the control vector of the PIN generating key. The input PIN is always formatted and must conform to the allowed PIN block formats permitted by the VPIN instruction. When encrypted, the PIN block is encrypted using a PIN encrypting key. Internally, the VPIN instruction generates PINs using one of several possible PIN generation/verification algorithms. The desired PIN generation/verification algorithm is specified via a parameter input to the VPIN instruction. Each PIN generation/verification algorithm generates PINs from a common, secret PIN generating key and other user-, system- and algorithm-specific data supplied as inputs to the VPIN instruction.

- 4. PIN Translate

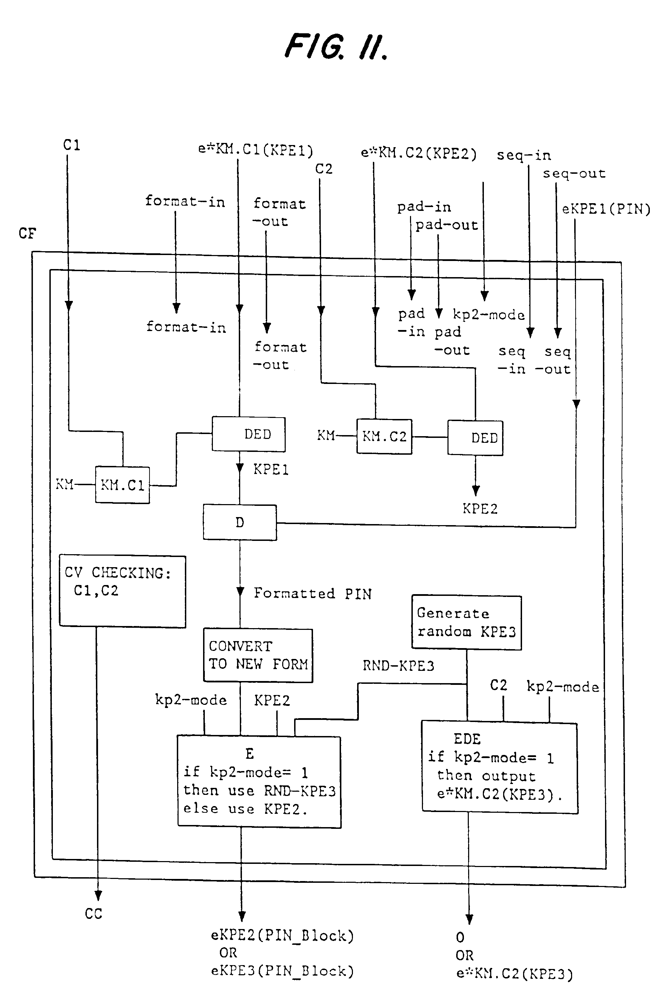

The PIN translate (PINT) instruction illustrated in Fig. 11 causes an input formatted PIN block enciphered under a first encrypting key to be re-enciphered under a second PIN encrypting key, or to be reformatted to a different PIN block format and then encrypted under the same PIN encrypting key, or to be reformatted to a different PIN block format and then re-encrypted under a second PIN encrypting key.

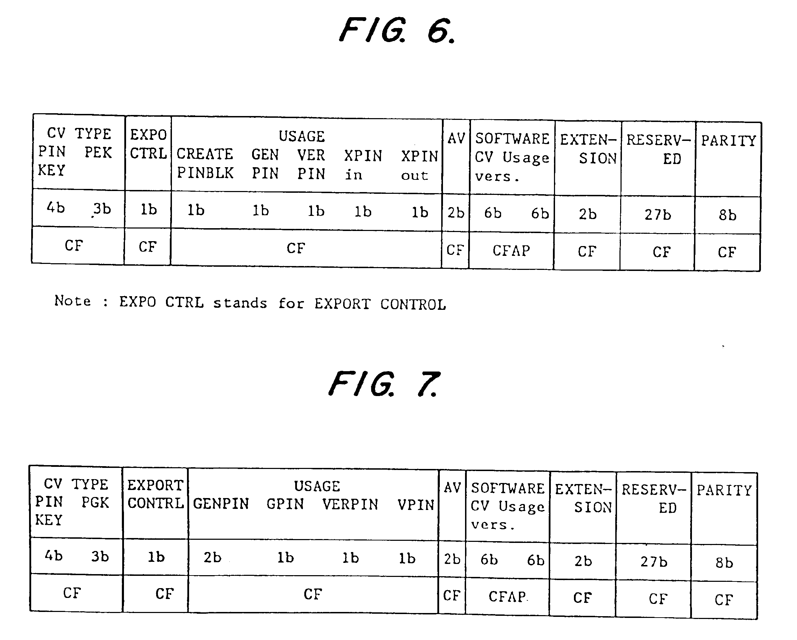

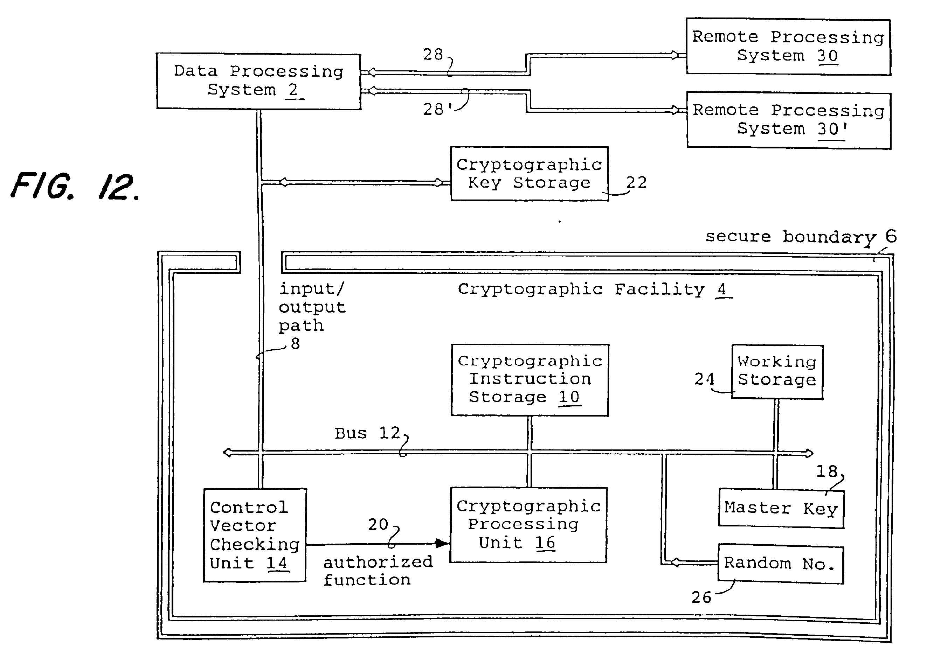

Fig. 12 gives a block diagram representation of the data processing system with the cryptographic facility therein. In Fig. 12, the data processing system 2 executes a program such as crypto facility access programs and application programs. These programs output cryptographic service requests for PIN management using cryptographic keys which are associated with control vectors. The general format for a control vector is shown in Fig. 6. Control vectors define the function which the associated key is allowed by its originator to perform. The cryptographic architecture invention herein is an apparatus and a method for validating that PIN processing functions requested for a cryptographic key by the program, have been authorised by the originator of the key.

As is shown in Fig. 12, contained within or associated with the data processing system 2 is a cryptographic facility 4 which is characterised by a secure boundary 6. An input/output path 8 passes through the secure boundary 6 for receiving the cryptographic service request, cryptographic keys and their associated control vectors from the program. The input/out path 8 outputs responses to those cryptographic requests from the cryptographic facility. Included within the secure boundary 6 is a cryptographic instruction storage 10 which is coupled by units of the bus 12 to the input/output path 8. A control vector checking units 14 is coupled to the instruction in storage 10 and a cryptographic processing units 16 is also coupled to the instruction storage 10. A master key storage 18 is coupled to the cryptographic processing unit 16. The cryptographic facility 4 provides a secure location for executing PIN processing functions in response to the received service request.

The cryptographic instruction storage 10 receives over the input/output path 8 a cryptographic service request for performing a PIN processing function with a cryptographic key. The control vector checking unit 14 has an input coupled to the input/output path 8, for receiving a control vector associated with the cryptographic key. The control vector checking unit 14 also has an input connected to the cryptographic instruction storage 10, for receiving control signals to initiate checking that the control vector authorises the key management function which is requested by the cryptographic service request.

The control vector checking unit 14 has an authorisation output 20 which is connected to an input of the cryptographic processing unit 16, for signalling that PIN processing function is authorised, the receipt of the authorisation signal by the cryptographic processing unit 16 initiates the performance of the requested PIN processing function with the cryptographic key. A cryptographic key storage unit 22 is coupled to the cryptographic facility 14 over the input/output path 8. The cryptographic key storage unit 22 stores the cryptographic key in an encrypted form in which the cryptographic key is encrypted under a storage key which is a logical product of the associated control vector and the master key stored in the master key storage 18.

An example of recovering an encrypted key from the cryptographic key storage 22 occurs when the cryptographic instruction storage 10 receives over the input/output path 8 a cryptographic service request for recovering the cryptographic key from the cryptographic key storage units 22. The control vector checking unit 14 will then output in response thereto, an authorisation signal on line 20 to the cryptographic processing unit 16 that the function of recovering the cryptographic key is authorised. The cryptographic processing unit 16 will then operate in response to the authorisation signal on line 20, to receive the encrypted form of the cryptographic key from the cryptographic key storage 22 and to decrypt the encrypted form under the storage key which is a logical product of the associated control vector and the master key stored in the master key storage 18.

The storage key is the exclusive-OR product of the associated control vector and the master key stored in the master key storage 18. Although the logical product is an exclusive OR operation in the preferred embodiment, it can also be other types of logical operations.

The associated control vector, whose general format is shown in Fig. 6, is stored with the encrypted form of its associated cryptographic key in the cryptographic key storage 22. Since all keys stored on a cryptographic storage encrypted under the master key, a uniform method for encryption and decryption of encrypted keys thereon can be performed.

The associated control vector, whose general format is shown in Fig. 6, includes fields defining the authorised types of cryptographic functions, including key management functions, data encryption/decryption functions and personal identification numbers (PIN) processing functions. In the PIN processing applications, the PIN processing functions type is designated for the type field. The associated control vector also includes additional fields which can define export control for the keys and associated encrypted information and the usage of the keys and associated encrypted information.

Notation

The following notation is used herein:

| | |
|---|---|
| ECB | Electronic code book |
| CBC | Cipher block chaining |
| KM | 128 bit Master key |
| KEK | 128 bit Key encrypting key |
| K | 64 bit key |
| *K | 128 bit key |
| (*)K | 64 or 128 bit key |
| KD | 64 bit data encrypting key |
| KK | 64 bit Key encrypting key |
| *KK | 128 bit Key encrypting key |
| KKo | offset 64 bit Key encrypting key |
| *KKo | offset 128 bit Key encrypting key |
| (*)KKo | offset 64 or 128 bit Key encrypting key |
| *KKNI | 128 bit partial notarizing Key encrypting key |

| | |
|---|---|
| *KN | 128 bit notarizing key, equivalent to *KKNlo |
| cx | 64 bit control vector |
| CxL | 64 bit left control vector |
| CxR | 64 bit right control vector |
| XOR or xor | exclusive or operation |
| or | logical or operation |
| X '0' | Hex notation |
| 11 | concantentation operation |
| [x] | optional parameter x |
| not = | not equal |
| E or e | single encryption |
| D or d | single decryption |
| EDE or ede | triple encryption |
| DED or ded | triple decryption |
| Equations | The function of each instruction is mathematically denoted in the form: |

I1, I2, I3, I4,... ==== O1, O2, O3,...

where I1, I2, I3,... are the inputs to the function and O1, O2, O3,... are the outputs from the function.

KM.Cx        (KML XOR Cx) 11 (KMR XOR Cx) = KMY 11 KMX
where, KML = Left 64 bits of the master key
        KM,
        KMR = right 64 bits of the master key KM,
        KMY = KML XOR Cx
        KMX = KMR XOR Cx

e*KM.Cx(key)    e*KM.Cx(key) = eKMY(dKMX(eKMY(key)))
where, KMY = KML XOR Cx
        KMX= KMR XOR Cx
        key = 64 bit key

e*KEKn.CX(key)    e*KEKn.Cx(key) = eKEKY(dKEKX(eKEKY(key)))
where, KEKY = KEKnL XOR CxL
        KEKX = KEKnR XOR CxR
        key = 64 bit key

e*KM.CxL(KEKnL)    e*KM.CxL(KEKL) = eKMY)dKMX(eKMY(KEKnL)))
where, KEKL = left 64 bits of KEK
        KMY = KML XOR CxL
        KMX = KMR XOR CxL

e*KM.CxR(KEKnR)    e*KM.CxR(KEKR) = eKMY(dKMX(eKMY(KEKnR)))
where, KEKR = right 64 bits of KEK
        KMY = KML XOR CxR
        KMX = KMR XOR CxR

e*KEKo(key)    e*KEKo(key) = eKEKLo(dKEKRo(eKEKLo(key)))
where, KEKLo = KEKL XOR cntr
        KEKRo = KEKR XOR cntr
        cntr = implicit 64-bit key-message
        counter for KEK
        key = 64 bit key

Cryptographic Separation of Keys

Keys are separated cryptographically under this arrangement according to key type and key usage attributes.

- 1. The architecture guarantees that cryptographic keys can be used only in the way or ways prescribed and intended.
- 2. Internal Versus On-The-Link Separation. Internally (i.e., within the cryptographic facility), keys are separated via control vectors or other appropriate/equivalent mechanism. On the link, keys are separated using control vectors.
- 3. Hardware Versus Software Enforcement. Certain cryptographic separation is implemented in hardware; other cryptographic separation can be implemented via software.

- 4. Control vector key types and compatibility-mode key types. In order that the compatibility-mode key types will not diminish the security, certain rules governing generation, distribution, and usage of these two classes of key types is imposed.
- 5. A list of required key separations under the disclosed arrangement is listed below:
    -- a) Data Privacy. ENCIPHER from DECIPHER, allows public key protocols such as mailbox, ballot and pass on.
    -- b) Data MAC. MACGEN from MACVER, allows for non-repudiation (equivalent of electronic signature).
    -- c) Data XLATE. Allows a secure translate channel to be established, where intermediate devices cannot decrypt encrypted data.
    -- d) Data COMPAT. Allows compatibility mode without weakening security of other data keys.
    -- e) Data ANSI. Allows ANSI X9.17 key management to be coexist with non-ANSI X9.17 key management without loss of security to either approach.
    -- f) Key Encrypting Keys. KEK Sender from KEK Receiver.
    -- g) PIN Keys. PIN Generating Key from PIN Encrypting Key. Pin Keys Separation

The justifications for the separation are given below:

- 1. A - PIN Generating Keys : PIN Encrypting Keys
  An insider who could cause a PIN block to be forced equal to a valid ID value and then encrypted under a PIN generating key instead of a PIN encrypting key, could expose PINs.
- 2. B - Generate PIN function : Encipher PIN function
  During PIN generation, the Encipher PIN attribute allows separation of PIN Generating keys that allow clear PINs to be generated from those that always must output encrypted PINs.
- 3. C - Create PIN Block & Generate PIN : Reformat PIN, Verify PIN & Xlate PIN
  Permits the PIN encrypting key to be used with routine PIN processing functions like Reformat PIN, Verify PIN and Xlate PIN without allowing PIN keys to be used or create or otherwise "introduce" PINs into the network at electronic speeds. This would prevent dictionaries of plain and encrypted PINs to be collected at electronic speeds, which would be useful in attacking and recovering PINs without directly deciphering them. Tight control needs to be enforced over where and when and under what conditions PINs may be introduced into the system.
- 4. D - Create PIN BlocK : Generate PIN
  Greater control can be exercised over the introduction of PINs into the network. A node with a requirement to create PIN blocks need not necessarily have a right or need to generate PINs.
- 5. E - Reformat PIN and Verify PIN : Xlate PIN
  Greater control can be exercised over the PIN processing functions in the network. A node with a need and right to translate PINs does not necessarily have a right or need to reformat a PIN or verify a PIN. The later two functions might be used in combination to exhaust PINs via an internal attack, whereas the Xlate PIN function could be used by some nodes without giving away full processing capabilities.

## Control Vectors

### Control Vectors Concept

The control vector is a 64 bit non-secret cryptographic variable for controlling the usage of keys. Each key K defined to the cryptographic system has an associated control vector C, i.e., the key and control vector define a tuple (K, C).

Each control vector specifies a CV TYPE, which broadly defines how the key may be used and the rules governing how that key may be communicated on the link. A key may be a data key, sender key encrypting key, receiver key encrypting key, PIN encrypting key, PIN generating key, Intermediate ICV, Key part or Token. Additional bits in the control vector specify exactly in which cryptographic instructions and parameter inputs the key may operate. Still other bits control the export of the key, i.e., whether the key can be exported or not.

The control vector is coupled cryptographically to the key via a special encryption function. For example, when the K is stored in a Key Storage, K is encrypted under a key formed by Exclusive-ORing the control vector with the master key, i.e., K is stored as the tuple (eKM.C(K), C), where KM.C denotes KM xor C. When K is transmitted on the link (from one device to another), a similar encrypted form is used. In this case, the master key KM is replaced by a key encrypting key KEK, where KEK is a key shared between the sender and receiver. Thus, K is transmitted as the tuple ( eKEK.C(K), C). The architecture does not require that the control vector be stored or transmitted with the key in situations where its value is defined implicitly from the context or can be reconstructed from available key-related information.

EP 0 354 771 B1

Since the control vector (C) is tightly coupled to the key (K), via the encrypted form eKM.C(K) or eKEK.C(K), it is apparent that K cannot be recovered from its encrypted form unless C is correctly specified.

Thus, if the tuple (EKM.C(K), C) is provided as an input to a requested cryptographic instruction, the cryptographic facility will first check the supplied value of C to determine that the requested usage of the key is permitted. Only then will C be used to decrypt eKM.C(K) to recover the clear value of K internal to the cryptographic facility. If a false value C* is specified, the cryptographic facility may be fooled temporarily into accepting C*, but K will not be recovered properly. Thus, there is no opportunity for a user to recover the correct value of K unless the correct value of C is also specified. The cryptographic principle is thus the basis upon which the entire architecture is built; and additional security is provided as necessary and where appropriate.

The control vector is a compact data structure for defining the usage attributes of a cryptographic key. The control vector is cryptographically coupled to the key via an encryption process. This process is such that the key can be decrypted properly only if the control vector is correctly specified. (Even a single bit change in the control vector will cause an entirely different key to be recovered.)

CV Checking

The control vector is designed to minimise CV checking. Control vector usage bits are defined and structured so that each usage attribute, by itself, grants or denies a specific usage. Thus, the capability to encipher data via the Encipher Data instruction is controlled via a single "Encipher" bit within the control vector whose type/subtype is "data/privacy".

Thus, each usage attribute is defined independently from all other usage attributes. This guarantees a CV checking process such that each instruction checks only the usage attributes called for by the requested function. A design wherein usage attributes are enabled only when certain other attributes are enabled or disabled is specifically avoided, since this increases CV checking. Some cross checking of attributes among two or more control vectors is required, but is kept to a minimum.

To facilitate and simplify CV checking, each cryptographic instruction, where necessary, is passed a "mode" parameter declaring a specified use of the key or keys passed as parameters to the instruction. Thus, the CV checking process tests each control vector according to the specified "mode". This eliminates costly cross checking among control vector attributes to ensure consistency.

The design also follows a principle that no cryptographic instruction generates a control vector. All control vectors are supplied to the cryptographic instructions as parameter inputs.

Where possible, like usage attributes and field definitions are located at the same bit positions in the control vector, regardless of CV type. This facilitates CV checking. For example, the translate ciphertext instruction interrogates the same bit positions in the data/privacy and the data/xlate control vectors, even though the usage bits are "E" and "D" for the data/privacy CV and "XOUT" and "XIN" for the data/xlate CV, respectively.

CV Structure

In general, the control vector structure (including formats, field and bit assignments) has been defined to minimise and to facilitate CV checking, while at the same time providing cryptographic security. The CV structure, so to speak, is the variable with the greatest degree of freedom in the design process.

The following design options have been employed in the control vector:

- 1. Vertical Separation. The control vector has a "CV Type" field that provides vertical separation within the control vector structure, much like the separation provided by variants.

Control vector types are defined along intuitive lines, following existing key terminology and key management. However, vertical separation is implemented only where necessary under the CA, thus ensuring architectural simplicity and ease of comprehension of the CV checking rules. By first defining broad classes of CV Main Types (e.g. Data Keys, Key Encrypting Keys, PIN Keys) and then further defining CV Subtypes and usage attributes within CV Type, the CV checking rules can be optimised much in the same way that a "divided and conquer" search can be employed more effectively than a brute force approach.

- 2. Horizontal Separation. The control vector is ideally suited as a data structure for recording the usage attributes to be associated with a key (or other cryptographic variable).

Within the CA, this is accomplished by specifying a bit in the control vector for every cryptographic instruction (or key parameter within the instruction, if more than one key parameter may participate) where the key may be used as an input. A bit value of "1" signifies that a usage of the key is "enabled" by the CF whereas a bit value of "0" signifies that a usage of the key is "disabled" by the CF. This form of control vector structuring is called horizontal separation.

- 3. Encoded Fields. A field of two or more bits is sometimes encoded for reasons of security.

11

An encoded field has the property that individual bits have no significance by themselves, but the bits together define a set of possible values. Encoded fields have the advantage that they define mutually exclusive events since the field can take on only one value at a time. Encoded fields have the potential disadvantage that CV checking is not always optimised from a performance standpoint. However, encoded fields are sometimes necessary to ensure that usage attributes cannot be mixed in inappropriate combinations that give rise to cryptographic attack or introduce some cryptographic weakness.

- 4. Protection From Non-System Generated Keys. The method for coupling the control vector and key is such that CV checking is unable to detect a system generated key (via KGEN or GKS) from a non-system generated key.

For this reason, a "back-door" method exists within the architecture for generating a keys and control vectors. It consists of defining a control vector "of choice" and a random number which is then represented as a key encrypted in the manner described under the architecture using the selected control vector. (However, the method has no capability to control the key actually recovered within the cryptographic facility.)

The so-called "back-door" method of key generation is primarily an annoyance, although in some cases cryptographic attacks would be possible if additional measures of defence were not taken in the architecture. It would be a simple matter to define an architecture that eliminates this "back-door" key generation (once and for all), but doing so would introduce additional unwarranted complexity and processing. A more practical approach is followed by the CA, viz., the "back-door" key generation problem is prevented only where necessary for security reasons. Thus, a good balance among security, complexity, and performance is achieved. Techniques to avoid cryptographic weaknesses introduced by the "back-door" method of key generation are these:

-- a) Where necessary, conflicting usage attributes within a single control vector are split among two control vectors. The GKS instruction has checking that prevents so-called bad combinations of key pairs from being generated.

-- b) Where necessary, conflicting usage attributes within a single control vector are grouped into a single encoded field.

-- c) As a last resort, extra redundancy is used so that the CF can validate its own system generated keys.

- 5. Even Parity for Control Vectors. Even parity is enforced on the control vector.

This ensures that the Exclusive-OR of an odd parity key with the control vector will result in an internal key of odd parity. This, in turn, ensures compatibility with hardware that may check such internally derived keys for odd parity (if such checking is enforced). Saying it another way, the CA cannot ensure that hardware will not enforce this odd parity on internal keys.

A control vector of 64 bits, numbered 0 through 63. The most significant bit is bit 0, by convention. Of the 64 bits, there are 8 parity bits.

- 6. Anti-Variant Bits. This guarantees cryptographic separation between variants and control vectors, which may unavoidably be mixed in some implementations internal to a node.

- 7. Avoid Onto Mappings. The control vector design and the manipulation of the control vector via the cryptographic instruction set avoids instances where CV fields with multiple values are mapped into a single value. Some specific instances of such onto mappings are allowed (e.g., LCVA, RFMK, and RTMK instructions) where security is not jeopardised.

## Control Vector Format for PIN Keys

PIN keys are divided into the following subtypes:
- a) PIN-encrypting keys (PEKs)
  These are the keys that are used to encrypt PINs.
- b) PIN-generating keys (PGKs)
  These are the types that are used to generate PINs. In some cases, the PGKs are also called PIN validating keys since they are used to validate/verify PINs.

## Control Vector for PIN-Encrypting Keys

Referring to Fig. 6, the following is a detailed description of each field and subfield of the figure.

- CV TYPE -

CV TYPE = B'0010000' for PIN-encrypting key (PEK) (maintype="PIN key"=B'0010', subtype="PIN-encrypting key"=B'000')

- EXPORT CONTROL - This field occupies 1 bit:

-- = 1: This key can be exported by RFMK. Also, the RFMK, RTMK and LCVA instructions can reset this bit to 0.

-- = 0: This key cannot be exported by RFMK. Also, it cannot be changed to 1 by any instruction.

- USAGE

-- a) CREATE PINBLK

---=1: This key is allowed to encipher the PIN Block in the CREATE PIN BLOCK instruction.

---=0: This key is not allowed to encipher the PIN Block in the CREATE PIN BLOCK instruction.

-- b) GENPIN

--- =1: This key is allowed to encrypt the input customer PIN (CPIN) in the GENERATE PIN instruction.

-- c) VERPIN

---=1: This key is allowed to decrypt the encrypted PIN input to the VERIFY PIN instruction.

---=0: This key is not allowed to decrypt the encrypted }IN input to the VERIFY PIN instruction.

- d) XPIN in

---=1: This key is allowed to decrypt the encrypted input PIN in the TRANSLATE PIN instruction.

---=0: This key is not allowed to decrypt the encrypted input PIN in the TRANSLATE PIN instruction.

-- e) XPIN out

---=1: This key is allowed to encrypt the output PIN in the TRANSLATE PIN instruction.

---=0: This key is not allowed to encrypt the output PIN in the TRANSLATE PIN instruction.

- AV (Anti-Variant)

This field differentiates any valid control vector from the 64 predefined variants that are used in variant-based crypto systems. Since all 8 bytes of the any variant of the 64 predefined variants are the same, setting the value of the AV field such that at least two bytes of the control vector are not the same will differentiate a valid control vector from a predefined variant.

- SOFTWARE bits

This field occupies 12 bits.

-- a) CV VERSION

This field is 6 bits long and is used by CFAP to distinguish the current control vector definition from future definitions.

-- b) Software-Enforced Usage - None.

This field indicates whether the control vector is a 64 bit control vector or an extended control vector of more than 64 bits.

- RESERVED bits

This field is reserved for the system for future use. To facilitate the ease of future uses for this field, the hardware must check to make sure that the last 16 bits of this field are all zero. Other bits of this field may not be checked. Of the reserved bits, one byte (including parity) is specifically reserved for the future expansion of the CV TYPE field.

- PARITY

This field consists of the last bit of every byte of the control vector. Every parity bit is the even parity of the preceding 7 bits of the byte.

Control Vector for PIN-Generating Keys

Referring to Fig. 7, the following is a detailed description of each field and subfield of the figure.

- CV TYPE

CV TYPE = B'0010000' for PIN-generating key (maintype="PIN key"= B'0010', subtype="PIN-generating key"=B'001')

- EXPORT CONTROL

-- = 1: This key can be exported by RFMK. Also, the RFMK, RTMK and LCVA instructions can reset this bit to 0.
-- = 0: This key cannot be exported by RFMK. Also, it cannot be changed to 1 by any instruction.

- USAGE

-- a) GENPIN
    This field occupies 2 bits, indicating the conditions under which the key is allowed to generate PINs or PIN Offsets in the GENERATE PIN instruction.
   --- = B'00': not allowed to generate PINs or PIN offsets.
   --- = B'01': allowed to generate a clear PIN or clear PIN offset.
   --- = B'10': allowed to generate an encrypted PIN or encrypted PIN offset.
   --- = B'11': allowed to generate a clear or encrypted PIN, or a clear or encrypted PIN offset.
-- b) GPIN
    This bit indicates whether the customer selected PIN (CPIN) can be input to the GENPIN instruction in the form of a clear PIN or an encrypted PIN.
   --- = 0: Clear or encrypted PIN is allowed.
   --- = 1: Only encrypted PIN is allowed
-- c) VERPIN
    This bit indicates whether the key can be used as a PIN-validating key to verify PINs in the VERIFY PIN instruction.
   --- = 1: Allowed to be used to verify PINs.
   --- = 0: Not allowed to be used to verify PINs.
-- d) VPIN
    This bit indicates whether the PIN to be verified in the VERIFY PIN instruction can be input to the instruction in the form of a clear PIN or an encrypted PIN.
   --- = 0: Clear or encrypted PIN is allowed.
   --- = 1: Only encrypted PIN is allowed.
-- AV (Anti-Variant)
    Same description as that of PIN-encrypting keys.
-- SOFTWARE bits
    This field occupies 12 bits.
   ---a) CV VERSION
     Same description as that of PIN-encrypting keys.
   ---b) Software-Enforced Usage - None.
-- EXTENSION
Same description as that of PIN-encrypting keys.
-- RESERVED bits
    Same description as that of PIN-encrypting keys.
-- PARITY bits
    Same description as that of PIN-encrypting keys.

## Pin Processing Instructions

The PIN processing instructions are described in detail in the following sections. These instructions must be implemented within the cryptographic facility.

## Create Pin Block (CPINB)

- Equation: e\*KM.C1(KPE), PIN, format-out, pad-in, seq-in, pan, a-pin-len, C1

  ==== eKPE(PIN_BLOCK)

- Inputs: e\*KM.C1(KPE)  KPE is the 64 bit PIN encrypting key triple encrypted under KM with a control vector C1 and used to encrypt the input PIN.

  PIN  1 to 16 decimal digits in clear.

  format-out  4 bit code indicating the PIN format to be used for the pin block.

  -- 0000: IBM 3624 format
  -- 0001: IBM 3621 format
  -- 0010: ANSI format
  -- 0011: 4704 format (encrypting key pad)
  -- 0100: Docutel, Diebold, NCR
  -- 0101: Burroughs
  -- 0110: ISO format

```
--  0111:  not used

--  1XXX:  not used
```

```
        pad-in          This is a pad-in character, a 4 bit value
                        from X'0' to X'F', to be used to format a
                        PIN according to the PIN format.  The pad
                        character and the number of padding
                        characters depend upon the type of format.
        seq-in          A two byte Sequence number.  If the PIN
                        format requires only a one byte sequence
                        number, then the least significant byte of
                        seq-in will be used.  Seq-in may or may
                        not be required depending upon the format.
        pan             Twelve 4-bit digits representing the
                        "rightmost" (least significant) 12 digits
                        of the primary account number.  Pan may or
                        may not be required depending upon the
                        format.
        a-pin-len       C1 is the control vector for the input pin
                        encrypting key.
-    Outputs: -


        eKPE(PIN_BLOCK_     The formatted PIN Block encrypted under
                           the pin encrypting key KPE.
```

Description: The Create PIN Block function is used to encrypt a clear PIN using input PIN encrypting key at ATMs or any other PIN input devices. The clear PIN is 1-16 decimal character input to the function, the PIN is formatted using the given format-out type and encrypted with KPE key. Now this formatted PIN can be sent to a verification node or any other intermediate node securely.

- CC:

   -- 1. successful operation
   -- 2. C1 is in invalid
   -- 3. Unsuccessful operation (error).

- Control Vector Checking:
      -- 1. Checking on C1

   --- cv type = "PIN KEY/PEK"
   --- Create PINBLK usage bit=1
   --- reserved =X'0'

## Generate IBM 3624 PIN (GPIN)

- Equation: e*KM.C1(KPG, [e*KM.C2(KD)], e*KM.C3(KPE), out-mode, eKPE(CPIN, [CPIN], dec-tab, val-data, a-pin-len, pad, cpin-mode, c1, [C2], C3

  ==== PIN        (Out-mode=0)

  ==== eKD(PIN)   (Out-mode=1)

  ==== Offset     (Out-mode=2)

  ==== eKD(Offset)  (Out-mode=3)

- Inputs: e*KM.C1(KPG)   KPG is the 64 bit Pin generating key, triple encrypted under KM with a control vector C1.

  e*KM.C2(KD)   KD is the 64 bit data key, triple encrypted under KM with a control vector C2 and used to encrypt the generated PIN or the generated Offset.

This optional parameter must be provided for out-mode =1 or out-mode =3.

e*KM.C3(KPE)   KPE is the 64 bit Pin encrypting key,

triple encrypted under KM with a control vector C3 and used to encrypt the customer PIN.

out-mode   Output mode indicates the form of output required.

-- 0: Clear PIN output

-- 1: eKD(PIN)

-- 2: Offset

-- 3: eKD(Offset)

eKPE(CPIN)   CPIN is a 64 bit (16 decimal coded digits), customer selected PIN.

Used to generate the Offset, this is an encrypted form of the customer selected PIN under the PIN encrypting key. The default is encrypted customer selected PIN to this function. (CPIN is a formatted PIN in IBM 3624 format.)

CPIN    CPIN is a 64 bit (16 decimal coded digits), customer selected PIN in clear form.

This optional input must be provided if cpin-mode = 0 is specified to the function. The clear customer PIN will be only permitted if the PIN generating key permits clear PINs to the function. The clear customer PINs are permitted by the CCA to be compatible with the existing system requirements.

dec-tab    Decimalisation table is a 64 bit plain input which represents 16 decimal digits to be used in the PIN generation process.

val-data    Validation data is a 64 bit plain user's data, padding included. Ordinarily it will be the user's PAN.

a-pin-len    a-pin-len is a 4 bit number (1-16) indicating how many digits of the generated PIN are assigned to the customer, and represents the number of digits in the intermediate PIN.

pad    This is a pad character, a 4 bit value from X'A' to X'F', to be used to format a PIN according to IBM 3624 PIN format.

There could be 0-15 pad characters (16 - number of pin characters = pad characters).

cpin-mode    cpin-mode specifies whether a clear customer PIN or encrypted customer PIN is passed to the function.

The control vector checking is enforced on the pin generating key to insure the security of using encrypted pins from the clear pins.

-- 0: clear CPIN

-- 1: encrypted CPIN

C1,C2,C3    C1, C2 and C3 are the control vectors for KPG, KD and KPE respectively.

C2 is an optional control vector which must be supplied if the output-type specified is either 1 or 3.

- Outputs: PIN:    This is a 64 bit IBM 3624 formatted PIN output in the clear.

Padding and formatting is done internal to the hardware.

eKD(PIN)    eKD(PIN) is the 64 bit formatted PIN encrypted under data key KD.

Decipher data instruction can be used to decipher the PIN in some other node for PIN mailing purposes. (A secure PC can be used to decrypt these encrypted PINs and print for mailing). No decryption of PINs are allowed in the generating node.

Offset    Offset is a 64 bit data, representing 1-16 decimal digits, used by the PIN verification process if the PIN was user selected.

The offset data reflects the difference between the PIN that is selected by the customer (denoted CPIN) and the PIN that is generated by the verification (denoted PIN).

Description: The GPIN instruction generates an IBM 3624 formatted PIN from the validation data and a PIN generating key. Alternatively, the GPIN instruction can accept a customers selected PIN to generate the Offset; the customer selected PIN can be in the clear or encrypted form.

The PIN output can be in clear or in encrypted form. The output PIN is always formatted using the supplied padding character. The clear output can be used for printing a clear PIN distributed via a PIN mailer. The encrypted PIN or offset is provided to support decrypting capability at the PIN mailer stations. A secure PC can be used to decrypt PINs and Offset and print on the customer card.

The Offset outputs is in clear or encrypted form. The Offset is written on the customer's card, in addition to the other information. The Offset is generated by subtracting intermediate PIN (length=assigned PIN length) from CPIN (length = 16). The padding in the CPIN is preserved and propagated to Offset.

NOTE: The PIN generating keys and PIN verification keys refer to the same key. The different names are often used pending upon the usage of the key in the function.

- CC:

-- 1. successful operation

-- 2. C1 or C2 or C3 is invalid

-- 3. invalid pad character

-- 4. invalid customer pin

-- 5. invalid decimalisation table

-- 6. unsuccessful operation (error).

- Control Vector Checking:

-- 1. cv type = "PIN KEY/PGK"

--- If out-mode = 0 or 2 then GENPIN = '01' or '11'

--- If out-mode = 1 or 3 then GENPIN = '10' or '11'

--- If CPIN-mode = 0 then EPIN =0

--- reserved = X'0'

-- 2. Checking on C2 if (out-mode = 1 or 3)

--- CV type = "data/compatibility" or "data/privacy"

--- E usage bit = 1

--- D usage bit = 0

-- 3. Checking on C3 if cpin-mode =1.

--- cv type = "PIN KEY/PEK"

--- GEN PIN usage bit = 1

### Verify IBM 3624 PIN (VPIN)

```
-       Equation: e*KM.C1(KPV), e*KM.C2(KPE), eKPE(PIN) [PIN], dec-tab,
                  val-data, a-in-len, p-chk-len, offset, pin-mode, C1, C2
                  ====  PIN OK
                            or
                  PIN NOT OK
-       Inputs:    e*KM.C1(KPV)   KPV is the 64 bit PIN validation key,
                                  triple encrypted under KM with a control
                                  vector C1.
```

PIN generating key (KPG) and the PIN validation key (KPV) have to be one and the same keys to verify the PIN. The key names KPV and KPG are used for the notation only.

e*KM.C2(KPE)    KPE is the 64 bit PIN encrypting key, triple encrypted under KM with a control vector C2.

eKPE(PIN)       eKPE(PIN) is the 64 bit formatted PIN encrypted under PIN input protection key.

Create PIN block is used to encrypt the formatted PIN. PIN is a 64 bit formatted PIN in IBM 3624 format. This s a standard input to the verify pin function.

PIN    PIN is a 64 bit (16 decimal coded digits), input PIN in clear form.

This optional input must be provided if pin-mode = 0 is specified to the function. The clear input PIN will be only permitted if the IN verification key permits clear PINs to the function. The clear input PINs are permitted by the CCA to be compatible with the existing system requirements.

dec-tab        decimalisation table is a 64 bit plain input which represents 16 decimal digits to be used in the PIN verification process.

val-data       valid data is a 64 bit users data, padding included.

Ordinarily it will be the user's PAN.

a-pin-len      a-pin-len is the number (1-16) indicating how many digits of the generated PIN is assigned to the customer; this is the number of digits of the intermediate PIN.

p-chk-len      p-chk-len is the number (1-16) indicating how many digits of the PIN assigned to the customer are checked in the verification process.

These digits are selected from right to left from the Intermediate pin and customer entered PIN.

offset     offset is a 64 bit data, representing 1-16 decimal digits, used by the PIN verification process if the PIN was user selected.

The offset data reflects the difference between the PIN that is selected by the customer and the intermediate PIN that is generated by the validation procedure.

pin-mode       pin-mode indicates the PIN entered is in clear or encrypted.

-- 0: clear

-- 1: encrypted

C1,C2      C1 and C2 are the control vectors for KPV and KPE

- Outputs: -

-- PIN-OK

-- PIN-NOT-OK

Description: The VPIN instruction generates an IBM 3624 formatted PIN from the validation data and a PIN validation key and compares it with the customer entered PIN. The customer entered PIN is an IBM 3624 formatted PIN which can be in clear or encrypted form.

The pin-mode indicates whether the entered PIN is in the clear or encrypted under a PIN encrypting key. Clear PIN input will only be permitted if the PIN verification key is allowed to use clear PIN inputs.

The Offset input is in clear. The entered PIN and the Offset are added (MOD 10) using only the left most digits equal to the length of A-pin-len. This result is compared with the intermediate PIN using only the right most digits equal to the length of P-chk-len. The output of this function is YES/NO on the compare of the PINs as illustrated above.

- CC:

-- 1. successful operation

-- 2. C1 or C2 is invalid

-- 3. invalid entered PIN

-- 4. invalid decimalisation table

-- 5. unsuccessful operation (error).

- Control Vector Checking:

-- 1. Checking on C1
--- cv type = "PIN KEY/PGK"
--- VERPIN usage bit = 1
--- If pin-mode = 1 then EPIN = 1
--- reserved = X'0'
-- 2. Checking on C2 if pin-mode = 1
--- cv type ="PIN KEY/PEK"
--- VERPIN usage bit = 1
--- reserved = X'0'

PIN Translate (PINT)

```
-     Equation:     e*KM.C1(KPE1), [e*KM.C2(KPE2)], eKPE1(PIN),

                    format-in, format-out, pad-in, pad-out, seq-in,

                    seq-out, pan, kp2-mode, C1, C2

                    ==== eKPE2(PIN_Block)

                            or

                    eKPE3(PIN_Block), e*KM.C2(KPE3)

-     Inputs:   e*KM.C1(KPE1)   KPE1 is the 64 bit PIN encrypting key, triple encrypted under KM with a control

                                vector C1 and used to encrypt the

                                formatted PIN inputs.

                e*KM.C2(KPE2)   KPE2 is an optional 64 bit PIN encrypting key, triple encrypted under KM with a

                                control vector C2, used to encrypt the

                                translated PIN for output.
```

KPE2 may or may not be equal to KPE1. If KPE2 is not supplied, a randomly generated KPE3 will be used to encrypt the translated PIN.

eKPE1(PIN)    This is a 64 bit encrypted formatted }IN under KPE1 key.

format-in    This is a 64 bit encrypted formatted PIN under KPE1 key.

-- 0000: IBM 3624 format
-- 0001: IBM 3621 format
-- 0010: ANSI format
-- 0011: 4704 format (encrypting key pad)
-- 0100: Docutel, Diebold, NCR
-- 0101: Burroughs
-- 0110: ISO format
-- 0111: not used
-- 1XXX: not used

format-out    4 bit code indicating the PIN format output.

-- 0000: IBM 3624 format
-- 0001: IBM 3621 format
-- 0010: ANSI format
-- 0011: 4704 format (encrypting key pad)
-- 0100: Docutel, Diebold, NCR
-- 0101: Burroughs
-- 0110: ISO format
-- 0111: not used
-- 1XXX: not used

pad-in    This is a pad-in character, a 4 bit value from X'0' to X'F', to be used to format a PIN according to the PIN format.

The pad character and the number of padding characters depend upon the type of format input.

pad-out    This is a pad-out character, a 4 bit value from X'0' to X'F', to be used to format a PIN according to the PIN format.

The pad character and the number of padding characters depend upon the type of format output.

seq-in    A two byte Sequence number.

If the input PIN format requires only a one byte sequence number, then the least significant byte of seq-in will be used. Seq-in may or may not be required depending upon the format-in.

seq-out    A two byte Sequence number.

If the output PIN format requires only a only a one byte sequence number, then the least significant byte of seq-out will be used. Seq-out may or may not be required depending upon the format-out.

pan    Twelve 4-bit digits representing the "rightmost" (least significant) 12 digits of the primary account number.

Pan may or may not be required depending upon the format (Check digits not included.)

kp2-mode    kp2-mode indicates whether a key encrypting key is supplied or has to be randomly generated securely.

When KPE2 is supplied, it is supplied in encrypted form e*KM.C2(KPE2), so that the key is not exposed in clear outside the crypto facility.

-- 0: KPE2 supplied
-- 1: KPE3 has to be generated randomly

When KPE3 is generated randomly, it has to be generated in the crypto facility and implies that any reformat combination is allowed. When KPE2 is supplied, certain translation combinations must be disallowed based on an implementation dependent, secure mapping table. See Note under Description below.

C1,C2    C1 and C2 are the control vectors for KPE1, KPE2 respectively.

KPE2 is supplied or output depending on kp2-mode equal to '0' or '1'. C2 is always supplied to the function.

- Outputs: eKPE2(PIN_Block)    the 64 bit translated PIN encrypted under PIN encrypting key KPE2; the PIN is translated according to the output format specification.

eKPE3(PIN_Block)    the 64 bit translated PIN encrypted under PIN encrypting key KPE3; the PIN is translated according to the output format specification.

e*KM.C2(KPE3)    a randomly generated triple encrypted key, KPE3, under KM with a control vector C2.

Description: The PIN translate (PINT) function is used to translate the PIN from one PIN block format to another PIN block format without the PIN appearing in clear outside the cryptographic facility. The PIN is securely translated from one pin encrypting key to the other pin encrypting key. The PIN Block formats are described in Fig. 8.

The PIN encrypting keys KPE1, KPE2 could be the same of different. If they are the same then the input parameters e*KM.C1(KPE1) and e*KM.C2(KPE2) are equal and C1 = C2.

NOTE: Certain reformatting combinations (as selected by format-in and format-out) may weaken the security of an encrypted PIN. If an opponent were permitted to generate all formats of encrypted PINs under a fixed output key, a dictionary attack could be waged. For this reason, the permissible combinations must be restricted whenever KPE2 is specified on input. A suggested method is to define an 8*8 mapping table of bit entries, indexed by format-in and format-out. The bit entry for a specified reformat combination is set to '1' if the combination is permitted, otherwise it is zero. This table must be stored/accessed with integrity (e.g. within the CF).

One method to load this table with integrity is via a handheld keypad attached to the CF through a secure front-panel interface. The keypad is enabled by a front-panel keyswitch. The physical key may be held by trusted security personnel. The CF may include one or more instructions, such as LOAD_XLATE_AUTHORITY_TABLE, which verify that the physical keyswitch is in the enable position and then transfer the contents of the keypad buffer into the internal table storage locations. If the keyswitch is not in the proper position, the instruction aborts with an appropriate error code. An alternative to the physical keyswitch would be to require the security personnel to enter a secret password. The instruction would then cryptographically verify the password before updating the internal table. The new table contents need not come from an external device, such as the keypad. Although less secure, an application program could pass this table to the CF through programming interfaces. Again, however, the transfer should be enabled via a physical keyswitch or personnel-entered password. The method chosen to load the authorisation table is up to the implementer. The goal is to provide a means to securely load the table into the CF, thereby preventing substitution or modification by unauthorised personnel. The table is referenced by PINT whenever an explicit KPE2 is supplied as an input parameter.

On the other hand, if KPE2 is not specified, KPE3 is randomly generated and thus cannot be used to reformat PINs under a fixed key. The reformatted, encrypted output PIN is essentially cryptographically separate from the input PIN. For that reason, no combination restrictions are required if KPE3 is randomly generated.

In either case, the output PIN may be used as input to the PIN verification function or sent to another node.

- CC:

  -- 1. successful operation
  -- 2. C1 or C2 is invalid
  -- 3. invalid format
  -- 4. unsuccessful operation (error)

Control Vector Checking:

  -- 1. Checking on C1
    --- cv type = "PIN KEY/PEK"
    --- PIN XLT IN usage bet = 1
    --- reserved = X'0'
  -- 2. Checking on C2
    --- cv type = "PIN KEY/PEK"
    --- PIN XLT OUT usage bet = 1
    --- reserved = X'0'

Standards and Definitions

Standards

| | |
|---|---|
| ANSI X2.92 - 1981 | "Data Encryption Algorithm". |
| ANSI X9.106 -1983 | "Modes of DEA Operation". |
| ANSI X9.2 - 198X | "Interchange Message Specification for Debit and Credit Card Message Exchange Among Financial Institutions". This standard specifies a common interface by which bank card originated messages relating to a financial transaction may be interchanged between private systems. It specifies message structure, format and content, data elements and values for data elements. |

| | | |
|---|---|---|
| ANSI X9.8 - 1982 | "American National Standard for Personal Identification Number (PIN) Management and Security". This standard establishes standards and guidelines for the management and security of the Personal Identification Number's (PIN's) life cycle. | |
| ANSI X9.9 - 1986 | "American National Standard for Financial Institution Message Authentication (Wholesale)". This standard established a method to authenticate financial messages (wholesale), including fund transfers (e.g. wire transfers), letters of credit, security transfers, loan agreements and foreign exchange contracts. | |
| ANSI X9.17 - 1985 | "Financial Institution Key Management (Wholesale)". This standard establishes methods (including the protocol) for the generation, exchange and use of cryptographic keys of authentication and encryption. | |
| ANSI X9.19 - 198X | "Financial Institution Retail Message Authentication". This standard establishes a method to authenticate financial messages for retail transactions. | |
| ANSI X9.23 - 198X | "Encryption of Wholesale Financial Messages". This standard established a method to encrypt wholesale financial messages in order to provide confidentiality (e.g., wire transfers, letters of credit, etc.) | |
| ISO DIS 8583 | "Bank Card Originated Messages - Interchange Message Specifications - Content for Financial Transactions". This international standard specifies a common interface by which bank card originated messages relating to a financial transaction may be interchanged between private systems. It specifies message structure, format and content, data elements and values. | |
| ISO DIS 8720 | "Message Authentication" | |
| ISO DP 8730 | "Banking - Requirements for Standard Message Authentication (wholesale)". This international standard specifies a technique for protecting the authenticity of messages passing between financial institutions by means of a Message Authentication Code (MAC). | |
| ISO DP 8731 | "Banking - Approved Algorithms for Message Authentication - Part 1 : DES-1 Algorithm". This part of ISO 8731 deals with the Data Encryption Algorithm (DEA-1) as a method for use in the calculation of the Message Authentication Code (MAC). Part-2 Other non DEA Algorithms | |
| ISO DP 8732 | "Banking - Key Management Wholesale" This international standard specifies methods for the management of keying material used for the encryption and authentication of messages exchanged in the course of wholesale financial transactions. | |
| ISO DP 9546 | "Personal Identification Number Management and Security Part 1 - PIN Protection Principles and Technique" This standard specifies the minimum security measures required for effective PIN management. Standard means of interchanging PIN data are provided. | |

In an alternative embodiment of the invention, clear keys can be stored in the crypto facility for immediate availability in cryptographic operations. Those clear keys can be stored for example in the working storage 24 in Fig. 1 of the crypto facility.

In a first method, each key and its associated control vector are stored as a paired expression in the RAM within the crypto facility. Each such key and control vector are initialised within the crypto facility, in advance of their intended use, via a special authorised procedure available only to authorised system personnel (e.g., a security officer). A procedure similar to initialising a master key (e.g., via a hand-held key entry device attached to a front panel interface, which is enable via a physical key-activated key switch) could easily be adapted for initialising keys and control vectors within the crypto facility. Methods for initialising parameters within the crypto facility are well-known in the art. During routine operations, in order to access a particular key, the associated control vector is first accessed and the control vector checking operation is carried out as has been previously described, in order to ensure that the proposed key usage is authorised. If the authorisation is affirmative, then the corresponding key is accessed from the RAM and is used for the intended operations within the crypto facility.

In a second method, the exclusive-OR product of the key and its associated control vector are stored in the RAM inside the crypto facility, i.e., instead of storing the key and control vector paired expression (as with the first method) and key and control vector are exclusive-ORed and the product of the exclusive-OR operation is stored in the RAM inside the crypto facility. A procedure for initialising the crypto facility could be based on performing the exclusive-OR operation of the key and control vector outside the crypto facility and then entering their product as a parameter using a procedure similar to that for entering the key and control vector, as described for the first method. Alternatively, the key and control vector could be exclusive-ORed within the crypto facility and the product then stored as before. Later on, the steps to access a key can be traced as follows. An instruction which designates the use of a particular key must also provide the control vector associated with that key as a parameter of the instruction. The control vector is first checked, as before, using the control vector checking operation, in order to ensure that the proposed key usage is authorised. If the authorisation is affirmative, the exclusive-OR product of the key and control vector stored in the crypto facility is accessed and exclusive-ORed with the control vector supplied as a parameter to the instruction to recover the clear key which is then used in the intended cryptographic operations. It can be seen that if cheating is attempted, i.e., a false control vector is specified in an instruction, then the clear value of the recorded key is not correct (i.e., is not the correct key value). The crypto instructions are designed such that no useful outputs are obtained when an incorrect key value is produced as a result of such control vector cheating. In the second method, the preferred form for storing the key K is to use the exclusive-OR as the combining function, F, between the key and its control vector C, forming a product, and the inverse combining function, $F^{-1}$, is the exclusive-OR of the product with the control vector. However, there may be particular applications where other combining functions, F, and their inverse, $F^{-1}$, are more appropriate. For example, applications requiring greater security can define F as an encrypting transformation, for example where the key K is encrypted under its control vector C forming eC(K), and the inverse transformation is a decrypting function, for example where eC(K) is decrypted under C.

Thus, cryptographic PIN processing is achieved in an improved manner by associating control vectors with the PIN generating (verification) keys and PIN encrypting keys which provide authorisation for the uses of the keys intended by the originator of the keys. The originator may be the local cryptograhic facility (CF) and a utility program under the control of a security administrator, or the originator may be another network node which uses compatible key management methods to distribute the keys. Among the uses specified by the control vector are limitations on the authority to use the associated key with certain PIN processing instructions, such as PIN generation, verification, translation and PIN block creation. Furthermore, the control vector may limit the authority of certain instructions to process clear PIN inputs (such as in PIN verification). The control vector may contain information identifying and, possibly restricting, PIN processing to a particular PIN format or particular processing algorithm.

The control vector implementation provides a flexible method for coupling format, usage, and processing authorisation to keys. The system administrator can exercise flexibility in changing the implementation of his security policy by selecting appropriate control vectors in accordance with the invention. Furthermore, a method is provided for the security administrator to restrict certain PIN format translations.

## Claims

1. In a data processing system which processes cryptographic service requests for PIN processing using cryptographic keys,

    a method for validating that PIN processing functions requested for a cryptographic key have been authorised by the originator of the key, comprising the steps of:

    receiving a cryptographic service request for performing a PIN processing function on a cryptographic key in a cryptographic facility (4) characterised by a secure boundary (6) through which passes an input path and an output path (8);

    receiving a control vector associated with the cryptographic key and defines the functions which each key is allowed by its originator to perform, the control vector being coupled cryptographically to the key via an encryption function, and checking that the control vector authorises the PIN processing function which is requested by the cryptographic service request;

    signalling that the PIN processing function is authorised and initiating the performance of the requested PIN processing function with the cryptographic key.

2. A method as claimed in claim 1, wherein the PIN processing is achieved by associating the control vector with a PIN generating key or a PIN verification key or a PIN encrypting key, to provide authorisation for the use of the key intended by the originator of the key.

3. A method as claimed in either preceding claim, wherein the control vector specifies limitations on the authority to use the associated key with designated ones of the following -
    - certain PIN processing instructions;
    - PIN generation functions;
    - PIN verification functions;
    - PIN translation functions;

- PIN block creation functions;
- processes to clear PIN inputs;
- PIN processing functions having a particular PIN format.

4. A method as claimed in any preceding claim, in apparatus incorporating plural linked nodes, wherein the control vectors define node linkages to be allowed by the originator.

5. A method as claimed in claim 2, which further comprises:

storing working keys in clear text form and storing their respective associated control vectors in a working key storage (24) within the cryptographic facility;

receiving over the input path (8) a cryptographic service request for performing a PIN processing function which includes accessing the cryptographic key and the associated control vector from the working key storage (24) and outputting in response thereto, an authorisation signal that the requested PIN processing function is authorised;

performing the requested PIN processing function with the cryptographic key in response to the authorisation signal.

6. A method as claimed in claim 5, wherein the control vector selectively limits the authority of the PIN processing function to perform one of the following -
- to process clear PIN inputs;
- to process a predetermined PIN format;
- to use a predetermined processing algorithm;
- to use the cryptographic key in PIN generation;
- to use the cryptographic key in PIN verification;
- to use the cryptographic key in PIN translation;
- to use cryptographic key in PIN block creation.

7. A method as claimed in any preceding claim, which further comprises:

storing the working keys in working key storage (24) under a combining function (F - i.e., as a logical combination of e.g., the exclusive-OR product) of each key with its respective control vector;

the cryptographic facility (4) receiving over the input path (8) a cryptographic service request for performing a PIN processing function and also receiving the corresponding associated control vector which undergoes control vector checking; and

outputting an authorisation signal that the cryptographic service request is authorised, the corresponding combination product of the control vector and its respective key then being further combined (- i.e., under the reverse combining function $F^{-1}$ e.g., if exclusive-ORed as stored, exclusive-ORed again -) with the control vector in order to recover the key for the requested cryptographic operation.

8. In a data processing system which processes cryptographic service requests for management of cryptographic keys,

an apparatus for validating that PIN processing functions requested for a cryptographic key have been authorised by the originator of the key by the method of claim 1, comprising:

a cryptographic facility (4) having a secure boundary (6) through which passes an input path (8) for receiving the cryptographic service requests, cryptographic keys and their associated control vectors, and an output path (8) for providing responses thereto, there being included within the boundary (6), a cryptographic control means coupled to the input path, a control vector checking means (14) and a cryptographic processing means (16) coupled to the instruction storage (10), and a master key storage (18) coupled to the processing means, for providing a secure location for executing PIN processing functions in response to the received service requests; the cryptographic control means receiving over the input path a cryptographic service request for performing a PIN processing function with a cryptographic key; the control vector checking means (14) having an input coupled to the input path (8) for receiving a control vector which is associated with the cryptographic key and defines the function which the key is allowed by its originator to perform, the control vector being cryptographically coupled to the key via an encryption function, and an input connected to the cryptographic control means, for receiving control signals to initiate checking that the control vector authorises the PIN processing function which is requested by the cryptographic service request;

the control vector checking means having an authorisation output (20) connected to an input of the cryptographic processing

means (16), for signalling that the PIN processing function is authorised, the receipt of which by the cryptographic processing means (16) initiates the performance of the requested PIN processing function with the cryptographic key.

9. Apparatus as claimed in claim 8, including checking means for checking for the association of the control vector with the requested PIN function to provide authorisation for the use of the key intended by the originator of the key for one of the following-
   - PIN generation;
   - PIN verification;
   - PIN encryption.

10. Apparatus as claimed in claim 9, wherein the checking means is adapted to check for the current control vector specifying limitations on the authority to use the associated key with certain PIN processing instructions, including one or more of the following-
   - to use the associated key for PIN generation functions;
   - to use the associated key in PIN verification functions;
   - to use the associated key in PIN translation functions;
   - to use the associated key in PIN block creation functions;
   - to use the associated key to process clear PIN inputs;
   - to use the associated key for PIN processing functions having a particular PIN format.

11. Apparatus as claimed in any of claims 8 to 10, which further comprises cryptographic key storage means (22) coupled to the cryptographic facility over the input and output paths (8), for storing the cryptographic key in an encrypted form in which the cryptographic key is encrypted under a storage key which is a logical product of the associated control vector and a master key stored in the master key storage.

12. Apparatus as claimed in any of claims 8 to 11, which further comprises working key storage (24) within the cryptographic facility coupled to the cryptographic processing means, for providing a secure location for the storage of working keys.

13. Apparatus as claimed in claim 12, in which the working key storage (24) stores a plurality of working keys and their associated control vectors in clear text form;
   the cryptographic facility receiving over the input path a cryptographic service request for performing PIN processing function; and
   the control vector checking means (14) checking the associated control vector accessed from the working key storage (24) and outputting an authorisation signal to the cryptographic processing means (16) that the cryptographic service request is authorised using the respective key accessed from the working key storage.

14. Apparatus as claimed in claim 12, in which the working keys are stored in the working key storage (24) under a combining function (F - i.e., as a logical combination of e.g., as the exclusive-OR product) of each key with its respective control vector;
   the cryptographic facility, when in receipt of a cryptographic service request for performing a PIN processing function and also an apparently corresponding associated control vector checking the same in the control vector checking means (14);
   the control vector checking means (14) outputting an authorisation signal to the cryptographic processing means (16) that the cryptographic service request is authorised, the inverse comining function $F^{-1}$ being applied to the stored product - e.g., the corresponding exclusive-OR product of the control vector and its respective key being exclusive-ORed with the control vector - in order to recover the key for the requested cryptographic operation.

## Patentansprüche

1. In einem Datenverarbeitungssystem, das kryptographische Dienstanforderungen zur PIN-Verarbeitung unter Verwendung von kryptographischen Schlüsseln verarbeitet,
   ein Verfahren zur Validierung, daß PIN-Verarbeitungsfunktionen, die für einen kryptographischen Schlüssel angefordert wurden, vom Urheber des Schlüssels autorisiert wurden, bestehend aus den folgenden Schritten:

Empfang einer kryptographischen Dienstanforderung zur Ausführung einer PIN-Verarbeitungsfunktion an einem kryptographischen Schlüssel in einer kryptographischen Einrichtung (4), charakterisiert durch eine sichere Begrenzung (6), durch die ein Eingabepfad und ein Ausgabepfad (8) läuft;

Empfang eines Kontrollvektors, der zum kryptographischen Schlüssel gehört und der die Funktionen definiert, die jede Taste laut Urheber ausführen darf, wobei der Kontrollvektor kryptographisch über eine Verschlüsselungsfunktion an den Schlüssel gekoppelt ist und sicherstellt, daß der Kontrollvektor die PIN-Verarbeitungsfunktion, die von der kryptographischen Dienstanforderung angefordert wird, autorisiert;

Signalisierung, daß die PIN-Verarbeitungsfunktion autorisiert ist, und Initiierung der Ausführung der angeforderten PIN-Verarbeitungsfunktion mit dem kryptographischen Schlüssel.

2. Ein Verfahren gemäß Anspruch 1, in dem die PIN-Verarbeitung durch Verknüpfung des Kontrollvektors mit einem PIN-Verarbeitungsschlüssel oder einem PIN-Verifikationsschlüssel oder einem PIN-Verschlüsselungsschlüssel erzielt wird, um die Autorisierung zur Benutzung des Schlüssels zu dem vom Urheber des Schlüssels beabsichtigten Zweck zu ermöglichen.

3. Ein Verfahren gemäß allen bisherigen Ansprüchen, in dem der Kontrollvektor Beschränkungen zur Autorisierung der Verwendung des dazugehörigen Schlüssels mit den folgenden bezeichneten Funktionen und Eingaben spezifiziert:
   - einige PIN-Verarbeitungsanweisungen;
   - PIN-Erzeugungsfunktionen;
   - PIN-Verifizierungsfunktionen;
   - PIN-Umwandlungsfunktionen;
   - PIN-Blockerstellungsfunktionen;
   - Verfahren zum Löschen von PIN-Eingaben;
   - PIN-Verarbeitungsfunktion,, mit einem bestimmten PIN-Format.

4. Ein Verfahren gemäß allen bisherigen Ansprüchen in einer Vorrichtung mit mehreren verknüpften Knoten, in dem die Kontrollvektoren die vom Urheber zu gestattenden Knotenverknüpfungen definieren.

5. Ein Verfahren gemäß Anspruch 2, das weiterhin folgendes umfaßt:
   Speicherung von Arbeitsschlüsseln in klarer Textform und Speicherung ihrer entsprechenden dazugehörigen Kontrollvektoren in einem Arbeitsschlüsselspeicher (24) innerhalb der kryptographischen Einrichtung;
   Über den Eingabepfad (8) Empfang einer kryptographischen Dienstanforderung zur Ausführung einer PIN-Verarbeitungsfunktion, die den Zugriff auf den kryptographischen Schlüssel und den dazugehörigen Kontrollvektor im Arbeitsschlüsselspeicher (24) und als Antwort darauf die Ausgabe eines Autorisierungssignals zur Autorisierung der angeforderten PIN-Verarbeitungsfunktion umfaßt;
   Ausführung der angeforderten PIN-Verarbeitungsfunktion mit dem kryptographischen Schlüssel als Antwort auf das Autorisierungssignal.

6. Ein Verfahren gemäß Anspruch 5, in dem der Kontrollvektor die Autorisierung der PIN-Verarbeitungsfunktion selektiv auf folgende Ausführungen begrenzt:
   - Verarbeitung klarer PIN-Eingaben;
   - Verarbeitung eines vorbestimmten PIN-Formats;
   - Verwendung eines vorbestimmten Verarbeitungsalgorithmus;
   - Verwendung des kryptographischen Schlüssels in der PIN-Erzeugung;
   - Verwendung des kryptographischen Schlüssels in der PIN-Verifizierung;
   - Verwendung des kryptographischen Schlüssels in der PIN-Umwandlung;
   - Verwendung des kryptographischen Schlüssels in der PIN-Blockerstellung.

7. Ein Verfahren gemäß allen bisherigen Ansprüchen, das weiterhin folgendes umfaßt:
   Speicherung der Arbeitsschlüssel in einem Arbeitsschlüsselspeicher (24) unter einer Kombinierungsfunktion (F - d.h. als eine logische Kombination beispielsweise des ausschließlichen OR-Produkts) jedes Schlüssels mit ihrem entsprechenden Kontrollvektor;
   die kryptographische Einrichtung (4) empfängt über den Eingabepfad (8) eine kryptographische Dienstanforderung zur Ausführung einer PIN-Verarbeitungsfunktion und ebenfalls zum Empfang des entsprechenden dazugehörigen Kontrollvektors, der eine Kontrollvektorprüfung durchläuft; und
   Ausgabe eines Autorisierungssignals, daß die kryptographische Dienstanforderung autorisiert ist, wobei das entsprechende Kombinationsprodukt des Kontrollvektors und seines entsprechenden Schlüssels

27

weiter mit dem Kontrollvektor kombiniert wird (d.h. unter der Umkehrkombinationsfunktion $F_{-1}$, d.h., bei Ausführung einer ausschließlichen OR-Operation gemäß Speicherung, eine nochmalige ausschließliche OR-Operation), um den Schlüssel für die angeforderte kryptographische Operation wiederherzustellen.

8. In einem Datenverarbeitungssystem, das kryptographische Dienstanforderungen zur Verwaltung kryptographischer Schlüssel verwaltet,
eine Vorrichtung zur Validierung, daß PIN-Verarbeitungsfunktionen, die für einen kryptographischen Schlüssel angefordert wurden, vom Urheber des Schlüssels durch das Verfahren von Anspruch 1 autorisiert wurden, bestehend aus:
einer kryptographischen Einrichtung (4) mit einer sicheren Begrenzung (6), durch die ein Eingabepfad (8) zum Empfang der kryptographischen Dienstanforderungen, kryptographischen Schlüssel und ihrer dazugehörigen Kontrollvektoren und ein Ausgabepfad (8) zur Bereitstellung von Antworten darauf verläuft, wobei innerhalb der Begrenzung (6) ein kryptographisches Kontrollmittel enthalten ist, das an den Eingabepfad gekoppelt ist, eine Kontrollvektor-Überprüfungseinheit (14) und eine kryptographische Verarbeitungseinheit (16), die an den Anweisungsspeicher (10) gekoppelt ist, und ein Hauptschlüsselspeicher (18), der an das Verarbeitungsmittel gekoppelt ist, zur Bereitstellung einer sicheren Position zur Ausführung von PIN-Verarbeitungsfunktionen als Antwort auf die empfangenen Dienstanforderungen; wobei das kryptographische Kontrollmittel über den Eingabepfad eine kryptographische Dienstanforderung zur Ausführung einer PIN-Verarbeitungsfunktion mit einem kryptographischen Schlüssel empfängt; die Kontrollvektor-Überprüfungseinheit (14) koppelt eine Eingabe an den Eingabepfad (8), um einen Kontrollvektor zu empfangen, der zum kryptographischen Schlüssel gehört, und der die Funktion definiert, die die Taste laut Urheber ausführen darf, wobei der Kontrollvektor kryptographisch an den Schlüssel, über eine Verschlüsselungsfunktion, gekoppelt ist, und wobei eine Eingabe an das kryptographische Kontrollmittel angeschlossen ist, um Kontrollsignale zu empfangen, die die Sicherstellung dessen initiieren, daß der Kontrollvektor die PIN-Verarbeitungsfunktion autorisiert, die von der kryptographischen Dienstanforderung angefordert wird;
der Kontrollvektor-Überprüfungseinheit mit einer Autorisierungsausgabe (20), die an die Eingabe des kryptographischen Verarbeitungsmittels angeschlossen ist, und signalisiert, daß die PIN-Verarbeitungsfunktion autorisiert ist, wobei der Empfang dieser Signalisierung durch das kryptographische Verarbeitungsmittel (16) die Ausführung der angeforderten PIN-Verarbeitungsfunktion mit dem kryptographischen Schlüssel initiiert.

9. Eine Vorrichtung gemäß Anspruch 8, die ein Überprüfungsmittel zur Überprüfung der Verbindung des Kontrollvektors mit der angeforderten PIN-Funktion zur Bereitstellung einer Autorisierung zur Verwendung des Schlüssels zu dem vom Urheber des Schlüssels beabsichtigten Zweck enthält, nämlich:
- PIN-Erzeugung;
- PIN-Verifizierung;
- PIN-Verschlüsselung.

10. Eine Vorrichtung gemäß Anspruch 9, in der die Überprüfungseinheit so angepaßt ist, daß sie den derzeitigen Kontrollvektor überprüft, der Beschränkungen zur Autorisierung des entsprechenden Schlüssels bei einigen PIN-Verarbeitungsanweisungen spezifiziert, wobei eine oder mehrere der folgenden Funktionen und Eingaben enthalten sind:
- Verwendung des dazugehörigen Schlüssels in PIN-Erzeugungsfunktionen;
- Verwendung des dazugehörigen Schlüssels in PIN-Verifizierungsfunktionen;
- Verwendung des dazugehörigen Schlüssels in PIN-Umwandlungsfunktionen;
- Verwendung des dazugehörigen Schlüssels in PIN-Blockerstellungsfunktionen;
- Verwendung des dazugehörigen Schlüssels zur Verarbeitung klarer PIN-Eingaben;
- Verwendung des dazugehörigen Schlüssels für PIN-Verarbeitungsfunktionen mit einem bestimmten PIN-Format.

11. Vorrichtung gemäß den Ansprüchen 8 bis 10, die weiterhin ein kryptographisches Schlüsselspeichermittel (22) umfaßt, das über die Eingabe- und Ausgabepfade (8) an die kryptographische Einrichtung gekoppelt ist und zur Speicherung des kryptographischen Schlüssels in verschlüsselter Form dient, wobei der kryptographische Schlüssel unter einem Speicherschlüssel verschlüsselt wird, der ein logisches Produkt des dazugehörigen Kontrollvektors und des im Hauptschlüsselspeicher gespeicherten Hauptschlüssels ist.

12. Vorrichtung gemäß den Ansprüchen 8 bis 11, die weiterhin einen Arbeitsschlüsselspeicher (24) innerhalb der kryptographischen Einrichtung umfaßt, die an das kryptographische Verarbeitungsmittel gekoppelt ist und eine sichere Position zur Speicherung der Arbeitsschlüssel bereitstellt.

13. Vorrichtung gemäß Anspruch 12, in der der Arbeitsschlüsselspeicher (24) eine Mehrzahl an Arbeitsschlüsseln und deren dazugehörige Kontrollvektoren in klarer Textform speichert;
wobei die kryptographische Einrichtung über den Eingabepfad eine kryptographische Dienstanforderung zur Ausführung der PIN-Verarbeitungsfunktion empfängt; und
wobei die Kontrollvektor-Überprüfungseinheit (14) den dazugehörigen Kontrollvektor überprüft, auf den im Arbeitsschlüsselspeicher (24) zugegriffen wurde, und an das kryptographische Verarbeitungsmittel (16) ein Autorisierungssignal ausgibt, das besagt, daß die kryptographische Dienstanforderung unter Verwendung des entsprechenden Schlüssels, auf den im Arbeitsschlüsselspeicher zugegriffen wurde, autorisiert ist.

14. Eine Vorrichtung gemäß Anspruch 12, in der die Arbeitsschlüssel im Arbeitsschlüsselspeicher (24) unter einer Kombinationsfunktion (F - d.h. als logische Kombination, d.h. als ausschließliches OR-Produkt) jeder Taste mit dem entsprechenden Kontrollvektor gespeichert sind;
wobei die kryptographische Einrichtung, sobald sie eine kryptographische Dienstanforderung zur Ausführung einer PIN-Verarbeitungsfunktion sowie eines scheinbar dazugehörigen entsprechenden Kontrollvektors, selbige in der Kontrollvektor-Überprüfungseinheit (14) prüft;
wobei die Kontrollvektor-Überprüfungseinheit (14) an das kryptographische Verarbeitungsmittel (16) ein Autorisierungssignal ausgibt, das besagt, daß die kryptographische Dienstanforderung autorisiert ist, daß die Umkehrkombinationsfunktion $F^{-1}$ auf das gespeicherte Produkt angewandt wird, das heißt, daß das entsprechende ausschließliche OR-Produkt des Kontrollvektors und seines entsprechenden Schlüssels einer ausschließlichen OR-Operation mit dem Kontrollvektor unterzogen wird, um den Schlüssel für die angeforderte kryptographische Operation wiederherzustellen.

## Revendications

1. Dans un système de traitement de données qui traite des demandes de service crytographique pour un traitement de numéro d'identification personnel (PIN) utilisant des clés cryptographiques,
procédé pour valider que les fonctions de traitement PIN requises pour une clé cryptographique ont été autorisées par l'émetteur de la clé, comprenant les étapes de:
réception d'une demande de service cryptographique pour remplir une fonction de traitement PIN sur une clé cryptographique dans une facilité cryptographique (4), caractérisée par une limite sûre (6) par laquelle passe un chemin d'entrée et un chemin de sortie (8);
réception d'un vecteur de contrôle associé à la clé cryptographique et qui définit les fonctions que chaque clé est autorisée à remplir par son émetteur, le vecteur de contrôle étant couplé cryptographiquement à la clé par l'intermédiaire d'une fonction de cryptage, et vérification que le vecteur de contrôle autorise la fonction de traitement PIN qui est requise par la demande de service cryptographique;
signalement que la fonction de traitement PIN est autorisée et initialisation de l'accomplissement de la fonction de traitement PIN avec la clé cryptographique.

2. Procédé selon la revendication 1, dans lequel le traitement PIN est accompli en associant le vecteur de contrôle à une clé de génération PIN ou à une clé de vérification PIN ou à une clé de cryptage PIN pour donner l'autorisation de l'utilisation de la clé voulue par l'émetteur de la clé.

3. Procédé selon l'une ou l'autre des revendications précédentes, dans lequel le vecteur de contrôle spécifie des limitations sur l'autorité d'utiliser la clé associée avec des opérations désignées parmi les suivantes:
   - certaines instructions de traitement PIN;
   - les fonctions de génération PIN;
   - les fonctions de vérification PIN;
   - les fonctions de conversion PIN;
   - les fonctions de création de bloc PIN;
   - les traitements pour effacer des entrées;
   - les fonctions de traitement PIN ayant un format PIN particulier.

4. Procédé selon l'une quelconque des revendications précédentes, dans un appareil incorporant plusieurs noeuds couplés, dans lequel les vecteurs de contrôle définissent des couplages de noeud à permettre par l'émetteur.

5. Procédé selon la revendication 2, comprenant en outre:
l'emmagasinage de clés de travail dans une forme de texte en clair et l'emmagasinage de leurs vecteurs de contrôle respectifs associés à des vecteurs de contrôle dans une mémoire de clés de travail (24) dans la facilité cryptographique;

La réception sur le chemin d'entrée (8) d'une demande de service cryptographique pour remplir une fonction de traitement PIN qui comprend l'accès à la clé cryptographique et au vecteur de contrôle associé dans la mémoire de clés de travail (24) et la sortie, en réponse à celle-ci, d'un signal d'autorisation que la fonction de traitement PIN requise est autorisée;

l'accomplissement de la fonction de traitement PIN requise avec la clé cryptographique en réponse au signal d'autorisation.

6. Procédé selon la revendication 5, dans lequel le vecteur de contrôle limite sélectivement l'autorité de la fonction de traitement PIN pour accomplir l'une des opérations suivantes:
- traiter des entrées d'effacement PIN;
- traiter un format PIN prédéterminé;
- utiliser un algorithme de traitement prédéterminé;
- utiliser la clé cryptographique dans une génération PIN;
- utiliser la clé cryptographique dans une vérification PIN;
- utiliser la clé cryptographique dans une conversion PIN;
- utiliser la clé cryptographique dans une création de bloc PIN.

7. Procédé selon l'une quelconque des revendications précédentes, comprenant en outre:
l'emmagasinage des clés de travail dans la mémoire de clés de travail (24) suivant une fonction de combinaison (F c'est-à-dire, en tant que combinaison logique, par exemple, du produit OU exclusif) de chaque clé avec son vecteur de contrôle respectif;

la facilité cryptographique (4) recevant sur le chemin d'entrée (8) une demande de service cryptographique pour remplir une fonction de traitement PIN et recevant également le vecteur de contrôle associé correspondant qui subit une vérification de vecteur de contrôle; et

la sortie d'un signal d'autorisation que la demande de service cryptographique est autorisée, le produit de combinaison correspondant du vecteur de contrôle et de sa clé respective étant alors en plus combiné (c'est-à-dire, suivant la fonction de combinaison inverse $F^{-1}$, par exemple, produit OU exclusif tel qu'emmagasiné, produit OU exclusif à nouveau) avec le vecteur de contrôle de manière à récupérer la clé pour l'opération cryptographique requise.

8. Dans un système de traitement de données qui traite des demandes de service cryptographique pour la gestion de clés cryptographiques,
appareil pour valider que des fonctions de traitement PIN requises pour une clé cryptographique ont été autorisées par l'émetteur de la clé au moyen du procédé de la revendication 1, comprenant:
une facilité cryptographique (4) ayant une limite sûre (6) par laquelle passe un chemin d'entrée (8) pour recevoir les demandes de service cryptographiques, les clés cryptographiques et leurs vecteurs de contrôle associés, et un chemin de sortie (8) pour fournir des réponses à celles-ci, étant inclus dans la limite (6) des moyens de contrôle cryptographiques couplés au chemin d'entrée, des moyen de vérification de vecteur de contrôle (14) et des moyens de traitement cryptographiques (16) couplés à la mémoire d'instructions (10), et une mémoire de clé principale (18) couplée aux moyens de traitement pour fournir un emplacement sûr à l'exécution des fonctions de traitement PIN en réponse aux demandes de service reçues, les moyens de contrôle cryptographiques recevant sur le chemin d'entrée une demande de service cryptographique pour remplir une fonction de traitement PIN avec une clé cryptographique, les moyens de vérification de vecteur de contrôle (14) ayant une entrée couplée au chemin d'entrée (8) pour recevoir un vecteur de contrôle qui est associé avec la clé cryptographique et qui définit la fonction que lui permet de remplir son émetteur, le vecteur de contrôle étant couplé cryptographiquement à la clé par l'intermédiaire d'une fonction de cryptage, et une entrée connectée aux moyens de contrôle cryptographiques pour recevoir des signaux de contrôle afin de commencer à vérifier que le vecteur autorise la fonction de traitement PIN qui est requise par la demande de service cryptographique;

les moyens de vérification de vecteur de contrôle ayant une sortie d'autorisation (20) connectée à une entrée des moyens de traitement cryptographiques pour signaler l'autorisation de la fonction de

EP 0 354 771 B1

traitement PIN dont la réception par les moyens de traitement cryptographiques (16) initialise l'accomplissement de la fonction de traitement PIN requise avec la clé cryptographique.

9. Appareil selon la revendication 8, comprenant des moyens de vérification pour vérifier l'association du vecteur de contrôle avec la fonction PIN requise afin de donner l'autorisation d'utiliser la clé voulue par l'émetteur de la clé pour l'une des opérations suivantes:
   - génération PIN;
   - Vérification PIN;
   - Cryptage PIN.

10. Appareil selon la revendication 9, dans lequel les moyens de vérification sont adaptés pour vérifier le vecteur de contrôle en cours spécifiant des limitations sur l'autorité d'utiliser la clé associée avec certaines instructions de traitement PIN comprenant une ou plusieurs des fonctions suivantes:
   - utiliser la clé associée pour des fonctions de génération PIN;
   - utiliser la clé associée dans des fonctions de vérification PIN;
   - utiliser la clé associée dans des fonctions de conversion PIN;
   - utiliser la clé associée dans des fonctions de création de bloc PIN;
   - utiliser la clé associée pour traiter des entrées d'effacement PIN;
   - utiliser la clé associée pour des fonctions de traitement PIN ayant un format PIN particulier.

11. Appareil selon l'une quelconque des revendications 8 à 10, comprenant en outre des moyens d'emmagasinage de clés cryptographiques (22) couplés à la facilité cryptographique sur les chemins d'entrée et de sortie (8) pour emmagasiner la clé cryptographique dans une forme cryptée dans laquelle la clé cryptographique est cryptée suivant une clé d'emmagasinage qui est un produit logique du vecteur de contrôle associé et d'une clé principale emmagasinée dans la mémoire de clé principale.

12. Appareil selon l'une quelconque des revendications 8 à 11, comprenant en outre une mémoire de clés de travail (24) dans la facilité cryptographique couplée aux moyens de traitement cryptographique pour fournir un emplacement sûr à la mémoire de clés de travail.

13. Appareil selon la revendication 12, dans lequel la mémoire de clés de travail (24) emmagasine une pluralité de clés de travail et leurs vecteurs de contrôle associés sous une forme de texte en clair;
    la facilité crytographique recevant sur le chemin d'entrée une demande de service crytographique pour remplir une fonction de traitement PIN; et
    les moyens de vérification de vecteur de contrôle (14) vérifiant le vecteur de contrôle associé auquel il y a eu accès à partir de la mémoire de clés de travail (24), et sortant sur les moyens de traitement cryptographique ((16) un signal d'autorisation que la demande de service cryptographique est autorisée en utilisant la clé respective à laquelle il y a eu accès depuis la mémoire de clés de travail.

14. Appareil selon la revendication 12, dans lequel les clés de travail sont emmagasinées dans la mémoire de clés de travail (24) suivant une fonction de combinaison (F c'est-à-dire, en tant que combinaison logique, par exemple, du produit OU exclusif) de chaque clé avec son vecteur de contrôle respectif;
    la facilité cryptographique, lorsqu'elle est en état de réception d'une demande de service cryptographique pour remplir une fonction de traitement PIN et également d'un vecteur de contrôle associé apparemment correspondant, vérifiant celui-ci dans les moyens de vérification de vecteur de contrôle (14);
    Les moyens de vérification de vecteur de contrôle (14) sortant sur les moyens de traitement cryptographique (16) un signal que la demande de service cryptographique est autorisée, la fonction de combinaison inverse $F^{-1}$ étant appliquée au produit emmagasiné -c'est-à-dire, le produit OU exclusif correspondant du vecteur de contrôle et de sa clé respective étant soumis à une condition OU exclusif avec le vecteur de contrôle- de manière à récupérer la clé pour l'opération cryptographique requise.

31

# FIG. 1.

# FIG. 2.

Grocer:
Debit Request ——▶

Customer:
Card w/PAN ——▶
PIN via Keypad ——▶

Grocer:
OK/NOT_OK ◀——

```
EFT
Terminal
```

Debit_Request_Msg: Grocer_acct_num
PAN
PIN_block
Acquirer_ID=X
Issuer_ID=Y

```
SWITCH
```

```
INSTITUTION X
HPC
```

Data Base
Update

```
INSTITUTION Y
HPC
```

Debit_
Authorization/
Disapproval_Msg

| GROCER ACCOUNTS DATA BASE | |
|---|---|
| Acct_num | Balance |

| CUSTOMER ACCOUNTS DATA BASE | | |
|---|---|---|
| PAN | PIN | Balance |

Data Base
Read/Update

EP 0 354 771 B1

EFT Terminal

**FIG. 3.**

Grocer:
Debit Request ——→

Customer:
Card w/PAN,Offset ——→
PIN via Keypad ——→

CF

• Create PIN
Block

PEK1

Debit_Request_Msg: (Grocer_acct_num
PAN
Offset (opt.)
ePEK1(PIN_block)
Acquirer_ID=X
Issuer_ID=Y)

Grocer:
OK/NOT_OK ←——

HPC/SWITCH

INSTITUTION X

CF

• PIN Translate

PEK2

PEK3

CF

• PIN Translate

PEK1

PEK2

**FIG. 4.**

ENCRYPTING PINPAD

CF

• ENCIPHER

PEK

ePEK
(CSPIN)

Customer
Selected
PIN

INSTITUTION Y

CF

• PIN Translate

• Verify PIN

PEK3

PGK

Data
Base
Update

GROCER ACCOUNTS
DATA BASE

| Acct_num | Balance |
|----------|---------|

Data Base Read/Update

NON-ENCRYPTING
PINPAD

CSPIN

CUSTOMER ACCOUNTS
DATA BASE

| PAN | Balance |
|-----|---------|

EP 0 354 771 B1

# FIG. 5.

PAN, out-mode, etc.
ePEK(CSPIN) or CSPIN

PIN Generating System

⌐... ──→ eKD(PIN) to Remote Mailer Station

CF

Local Mailer
Station

• GENERATE PIN:

PIN ──→ Printer ──→ PIN Mailer ──→ Mail to Customer

1 of 4

Local Card
Issuing Station

PGK

OFFSET ──→ Card Writer ──→ ─CARD─ w/ OFFSET,PAN ──→ Mail to Customer

PAN ──→

PEK

KD

... ──→ eKD(OFFSET) to Remote Card
Issuing Station

Remote Mailer
Station

CF

eKD(PIN) ──→ • DECIPHER ──→ Printer ──→ PIN Mailer ──→ Mail to Customer

KD

Remote Card
Issuing Station

CF

PAN

eKD(OFFSET) ──→ • DECIPHER ──→ Card Writer ──→ ─CARD─ w/ OFFSET,PAN ──→ Mail to Customer

KD

Note: Generate PIN instruction produces one of four possible
output forms (clear PIN, encrypted PIN, clear Offset, encrypted Offset)
based on specified out-mode parameter.

# FIG. 6.

| CV TYPE PIN KEY | PEK | EXPO CTRL | USAGE CREATE PINBLK | GEN PIN | VER PIN | XPIN in | XPIN out | AV | SOFTWARE CV Usage vers. | | EXTEN-SION | RESERV-ED | PARITY |
|---|---|---|---|---|---|---|---|---|---|---|---|---|---|
| 4b | 3b | 1b | 1b | 1b | 1b | 1b | 1b | 2b | 6b | 6b | 2b | 27b | 8b |
| CF | | CF | CF | | | | | CF | CFAP | | CF | CF | CF |

Note : EXPO CTRL stands for EXPORT CONTROL

# FIG. 7.

| CV TYPE PIN KEY | PGK | EXPORT CONTRL | USAGE GENPIN | GPIN | VERPIN | VPIN | AV | SOFTWARE CV Usage vers. | | EXTEN-SION | RESERV-ED | PARITY |
|---|---|---|---|---|---|---|---|---|---|---|---|---|
| 4b | 3b | 1b | 2b | 1b | 1b | 1b | 2b | 6b | 6b | 2b | 27b | 8b |
| CF | | CF | CF | | | | CF | CFAP | | CF | CF | CF |

EP 0 354 771 B1

# *FIG. 8.*

# FIG. 9.

# *FIG. 10.*

## FIG. II.

## FIG. 12.

Data Processing System 2

Remote Processing System 30

Remote Processing System 30'

28

28'

Cryptographic Key Storage 22

secure boundary 6

input/ output path 8

Cryptographic Facility 4

Cryptographic Instruction Storage 10

Working Storage 24

Bus 12

Control Vector Checking Unit 14

20

authorized function

Cryptographic Processing Unit 16

Master Key 18

Random No. 26